# EUROPEAN PATENT SPECIFICATION

(11) **EP 2 561 705 B1**
(45) Date of publication and mention of the grant of the patent: **03.08.2016**
(21) Application number: 11723120.9
(22) Date of filing: 19.04.2011
(51) Int. Cl.: H04W 36/00, H04W 84/04, H04W 36/04, H04L 29/06

(54) **METHODS FOR HANDOFF OF AN ACTIVE COMMUNICATION CONNECTION FROM A MACROCELL TO A FEMTOCELL**
VERFAHREN ZUR ÜBERGABE EINER AKTIVEN KOMMUNIKATIONSVERBINDUNG VON EINER MAKROZELLE ZU EINER FEMTOZELLE
PROCÉDÉ DE TRANSFERT D'UNE CONNEXION DE COMMUNICATION ACTIVE D'UNE MACROCELLULE À UNE FEMTOCELLULE

(30) Priority: 22.02.2011 US 201113031668; 23.04.2010 US 327167 P
(43) Date of publication of application: 27.02.2013
(73) Proprietor: Telefonaktiebolaget LM Ericsson (publ), 164 83 Stockholm (SE)
(72) Inventor: NGUYEN, Steven, Plano, Texas 75023 (US); ERIKSSON, Dennis, Plano, Texas 75025 (US)
(74) Representative: Rees, Simon John Lewis
(86) International application number: PCT/IB2011/051700
(87) International publication number: WO 2011/132149

(56) References cited:
- US-A1- 2008 020 771
- US-A1- 2008 304 451
- US-A1- 2008 305 801
- 3GPP2: "cdma200 Femtocell Network: 1x and IMS", 3GPP2 , no. 3GPP2 X.S0059-200-0 1 January 2010 (2010-01-01), XP002664705, Retrieved from the Internet: URL:http://www.3gpp2.org/public_html/specs /X.S0059-200-0_v1.0_100216.pdf [retrieved on 2011-11-30]

## Description

### TECHNICAL FIELD

The present invention relates to wireless communication systems, and more particularly, to a method for handing off an active communication connection from a macrocell to a femtocell.

### BACKGROUND

The IP Multimedia Subsystem (IMS), as defined by 3GPP and 3GPP2, merges telephone and Internet technology by providing an all-IP based architecture for the telecommunications industry. The IMS is based on the Session initiation Protocol (SIP) and makes heavy use of the protocols defined within the Internet Engineering Task Force (IETF). The system offers a network of servers and databases that assist a user agent with the task of establishing and managing sessions. IMS uses the term "sessions," because the connections between users are no longer limited to voice services (i.e., a telephone call). Sessions may be voice, video, text, or other services connecting two or more user agents together.

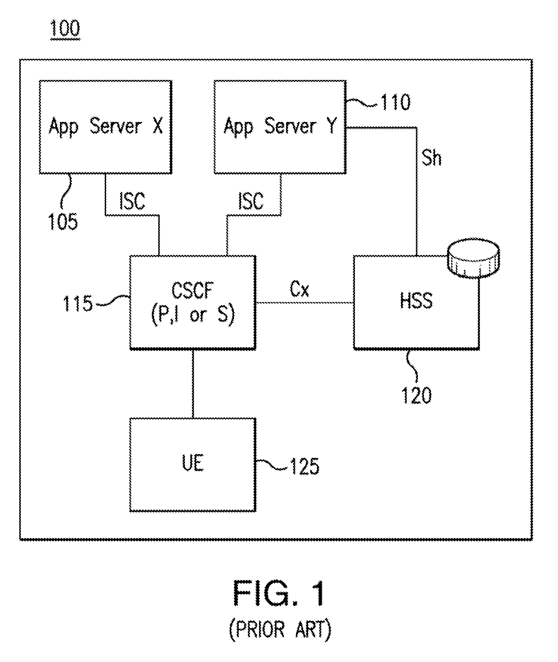

Referring now to Figure 1, the IMS architecture 100 includes User Equipment (UE) 125, Call Session Control Functions (CSCF) 115, Home Subscriber Server (HSS) 120 and Application Servers 105 and 110.

The UE includes a device that contains the SIP User Agent that will initiate or germinate sessions.

The CSCFs 115 are responsible for managing the sessions, including security and interconnnect. There are three types of CSCFs. First, a Proxy CSCF (P-CSCF) resides at the edge of the network and serves as an entry point for the UE into the IMS core. Second, an Interrogating CSCF (I-CSCF) serves as an entry point into the network for peering networks. The I-CSCF also acts as the lookup function for finding the appropriate serving node for a subscriber. Third, a Serving CSCF (S-CSCF) is responsible for authenticating the UE and managing ongoing sessions for the UE, including invocation of applications. The S-CSCF communicates with the HSS in order to retrieve the UE authentication information. After the user has been authenticated, the S-CSCF again communicates with the HSS 120 to retrieve the user profile which specifies the services to which a user has subscribed and which applications servers are to be invoked for those services.

The HSS 120 stores the relevant user data, including authentication information and service data. As part of the user profile, initial Filter Criteria (IFC) are defined to indicate which application servers are to be invoked, based on information in the signaling plane.

Applications Servers 105, 110 are invoked based on the iFC that are stored in the user profile. The S-CSCF will pass signaling onto an Application Server if the criteria defined in the IFC are met. Once invoked, the application server can take part in the session and provide additional capabilities.

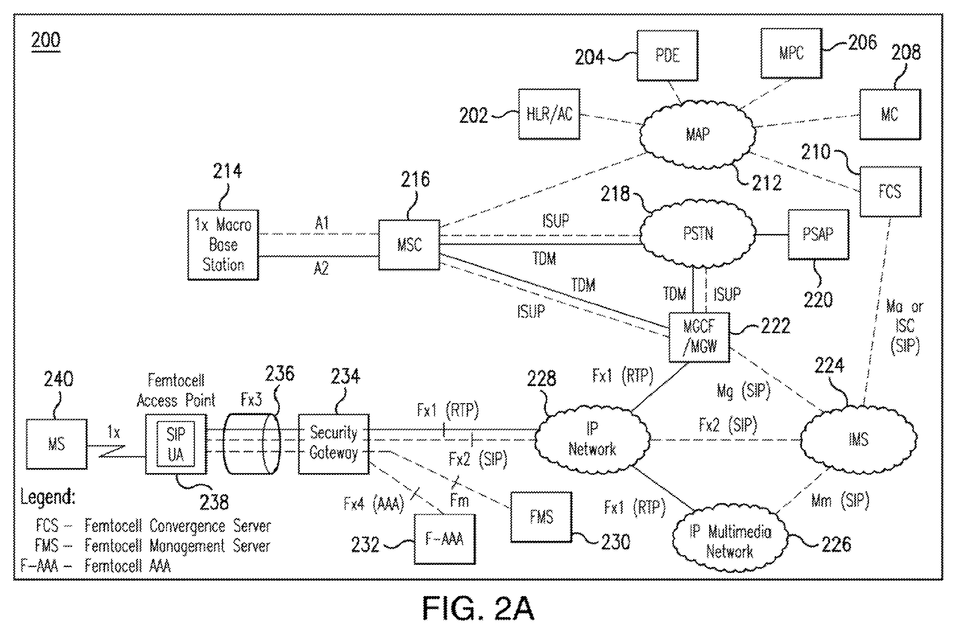

Referring now to Figure 2A, the architecture 200 of the converged CDMA IMS Femtocell system, as shown in Figure 1 of section 5.1.1 of 3GPP2-X.S0059 Femtocell Overview, is illustrated.

The converged CDMA IMS Femtocell system includes a CDMA Femtocell Access Point (FAP) 238, which is a CDMA 2000 1x access point that provides coverage in a small area, usually a private residence or a smell office, and connects a mobile station (MS) 240 to an operator's network 228 via a broadband connection, such as, for example, DSL or cable. Topically, a residential FAP is a miniature base station that implements the CDMA base transceiver station function, the base station controller function, and the packet control function (PCF). A plain old telephone service (POTS) telephone can be connected to a FAP via an ATA port. A typical residential FAP has a range of approximately 15 feet.

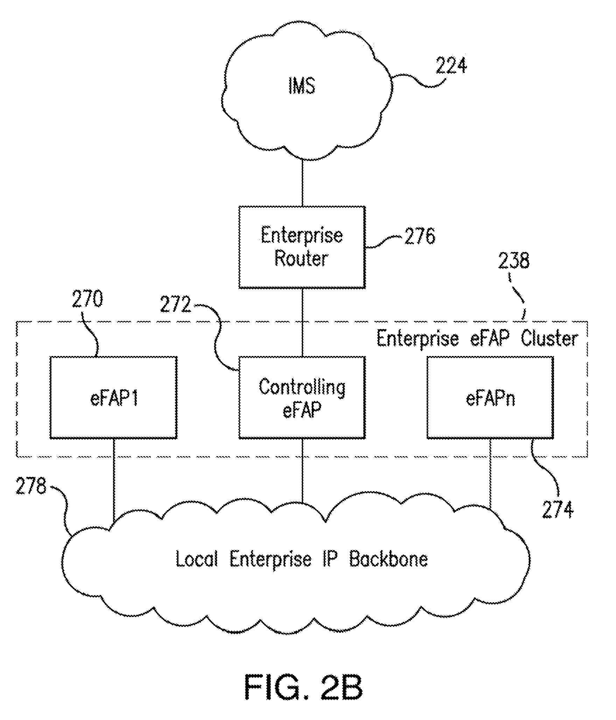

Referring also to Figure 2B, the converged CDMA IMS Femtocell system also includes a cluster 238 of up to n FAPs in large enterprises, where n = a maximum number of base stations supported in a soft handoff scenario in IS-95 or IS-2000. One FAP in the cluster is the Controlling FAP (CFAP) 272, and other individual FAPs may be designated is FAP1 270 and FAPn 274. In a macrocell-to-femtocells active mode handoff scenario, an individual FAP other than the CFAP 272 sends voice packets to the CFAP 272, which selects the strongest voice frame to send towards the IMS 224 via an enterprise router 276. In the downlink direction, the CFAP 272 receives a voice frame from the IMS 224 via the enterprise router 276 and sends the same voice frame to all of the FAPs, i.e., FAP1 270 and FAPn 274 involved in the soft handoff. Typically, an enterprise FAP is a miniature base station that implements the CDMA base transceiver station function, the base station controller function, and the packet control function (PCF). Enterprise FAPs are grouped by clusters. Each cluster has a Controlling FAP. All enterprise FAPs within a cluster communicate with each other via a local enterprise IP backbone 278. Signaling protocols between the CFAP 272 and the individual enterprise FAPs 270, 274 have not yet been defined by 3GPP2. Voice paths between the CFAP 272 and the individual enterprise FAPs 270, 274 may be established by using the Real-Time Transport Protocol.

The converged CDMA IMS Femtocell system also includes a Femtocell Management System (FMS) 230 that provides femtocell operation, administration, maintenance, and provisioning (OAM&P) functions.

The converged CDMA IMS Femtocell system also includes a Femtocell Authentication, Authorization, and Accounting (AAA) module 232 that provides a FAP authorization function. The AAA 232 sends authorization policy information to the Security Gateway (SeGW) 234. The SeGW authenticates the FAPs and protects the IP core network 228 from security attacks (e.g., denial of service) initiated by FAPs.

The converged CDMA IMS Femtocell system also includes IMS 224, an IP Multimedia Network 226, and an IP backbone network 228.

The converged CDMA IMS Femtocell system also includes a Media Gateway Control Function / Media Gateway (MGCF/MGW) 222 that connects IMS 224 to the legacy CDMA core network.

The converged CDMA IMS Femtocell system also includes a Femtocell Convergence Server (FCS) 210. The FCS 210 is an IMS Application Server that provides internetworking between the FAP, the SIP environment of IMS, and the appropriate Mobile Access Protocol (MAP) 212 network elements.

The converged CDMA IMS Femtocell system also includes legacy CDMA core network elements, including: the public switched telephone network (PSTN) 218 and a public safety answering point (PSAP) 220; a mobile switching center (MSC) 216; a base station controller (MSC) and a base station transceiver system (BTS) 214, a home location register (HLR) and authentication center (AC) 202; a position determining entity (PDE) 204; a mobile positioning center (MPE) 206; and a message center (MC) 208.

The MSC 216 is connected to the PSTN switch 218 via a TDM trunk. The MSC 216 is connected to the MGCF/MGW 222 via a nailed-up TDM trunk. The MSC 216 interacts with the HLR 202 and the CS 210 using IS-41 signaling. The MSC 216 is connected to at least one BSC via a TI connection or an Ethernet connection. Each BSC controls at least one BTS 214 via a T1 connection or an Ethernet connection. An MSC 216 can be either a TDM mobile switching center or a "Soft Switch" MSC.

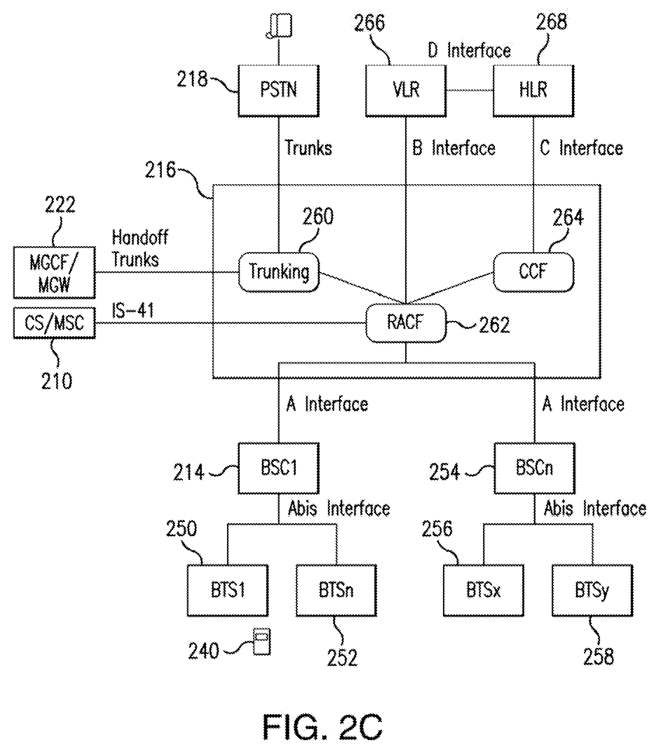

Referring now to Figure 2C, the MSC 216 includes a radio access control function (RACF) subsystem 262, a call control function (CCF) subsystem 264, and a trunking subsystem 260. The RACF subsystem is responsible for paging, mobility management (e.g., location update), and handoff. The RACF subsystem 262 interfaces with the base station controllers 214 and 254, typically via either a T1 interface or an Ethernet interface. Base station controller 214 interfaces with base station transceivers 250 and 252 via T1 or Ethernet, and base station controller 254 interfaces with base station transceivers 256 and 258 via T1 or Ethernet. The mobile station 240 communicates with the base station transceiver having the highest signal strength at any given moment.

The RACF subsystem 262 performs handoffs in coordination with the base station controllers 214 and 254, the trunking subsystem 260, and the convergence server 210 via respective IS-41 interfaces.

The RACF subsystem 262 also interfaces with a home location register (HLR) 268 and a visitor location registry (VLR) 266. The HLR 268 contains subscriber information for the mobile stations of a plurality of subscribers. The VLR 266 contains information relating to all mobile stations which have registered with the MSC 216.

The CCF subsystem 264 is responsible for translating and routing calls. The trunking subsystem 260 is responsible for trunk connectivity with the PSTN 218, the MGCF/MGW 222, and other mobile switching centers.

Conventional systems include a capability to complete a handoff of an active communication connection from a femtocell to a macrocell, e.g., when a mobile user station moves from an indoor residential environment out into a generic macrocell environment. U.S. patent publication No. US 2008/0020771, published 01.24.2008, discloses a system and method for handing a call off from a first telecommunications network to a second telecommunications network when, for example, a mobile device roams to or from a circuit switched network into an IMS network. Further, XP002664705 3GPP2:
"cdma200 Femtocell Network: lx and IMS", 3GPP2 no. 3GPP2 X.S0059-200-0 1 January 2010 (2010-01-01), describes the requirements and procedures for mobile station hand-offs between a femtocell access point (FAP) and a Macro base station (BS) when the mobile station (MS) is in the vicinity of a FAP. However, currently, the 3GPP2 femtocell standards and femtocell and convergence server vendors lack an efficient solution for handing off an active mobile user station (for example, a mobile user station that is on a call with another party) from a macrocell to a residential femtocell or to enterprise temtocells when the mobile user station moves into the femtocell coverage area. Consequently, a subscriber who is talking on a call via a macrocell base station and is moving to an indoor environment, such as a private residence, an enterprise, or a hotspot, will suffer from poor macrocell RF coverage in an indoor environment. Hence, there is a need for a method for efficiently performing a handoff from a macrocell to one or more femtocells that minimizes the likelihood of dropping the active communication connection during the handoff.

### SUMMARY

In one aspect, particular embodiments of the disclosed solution provide methods and a mobile switching center for performing a handoff of an active communication connection for a mobile user station from a macrocell to a femtocell, as defined by the appended claims.

Particular exemplary embodiments of the disclosed solution contemplate that the mobile user station is moved into an indoor residential environment within which the signal strength of the mobile user station with respect to the macrocell base transceiver station becomes relatively low. Other particular embodiments of the disclosed solution contemplate an enterprise environment, including a cluster of femtocell access points, into which the mobile user station is moved.

In one aspect, particular embodiments of the disclosed solution provide a method for performing a handoff of an active communication connection for a mobile user station from a macrocell to a femtocell is provided. At a mobile switching center corresponding to the macrocell, a first message is received. The first message is transmitted from a base station controller corresponding to the macrocell. The first message includes an indication that the active communication connection should be handed off to a femtocell access point corresponding to the femtocell. A second message is generated and transmitted to a target convergence server. The second message includes instructions for initiating the handoff. A third message is received. The third message is transmitted from the target convergence server. The third message includes an indication that the handoff has been successfully initiated. A fourth message is generated and transmitted to the base station controller. The fourth message includes a direction to the base station controller to commence the handoff. A fifth message is received. The fifth message is transmitted from the base station controller. The fifth message includes a handoff commencement acknowledgement. A sixth message is received from the target convergence server. The sixth message includes an indication of a completion of a successful handoff.

In another aspect of the particular embodiments of the disclosed solution, the handoff may be completed without a transmission of a Session Initiation Protocol (SIP) INVITE message between the target convergence server and the femtocell access point. The receiving of the first message may occur after the base station controller determines that a signal strength corresponding to the mobile user station is less than a predetermined threshold.

In some embodiments, the second message may include a femtocell identification and a Circuit identifier Code (CIC) corresponding to a handoff trunk communication channel between the mobile switching center and a media gateway station. The media gateway station may be in communication with the femtocell access point.

In some embodiments, after the second message has been transmitted, the third message may be received after the target convergence server has transmitted a request message to the femtocell access point that includes a request that the femtocell access point prepare for handoff and the femtocell access point has transmitted an acknowledgement message to the target convergence server. The third message may be received without a transmission of an additional acknowledgement message from the target convergence server to the femtocell access point.

In some embodiments, after the fourth message has been transmitted, the fifth message may be received after the base station controller has transmitted a Universal Handoff Direction message to the mobiles user station and the mobile user station has transmitted an acknowledgement message to the base station controller.

In some embodiments, after the fifth message has been received, the sixth message may be received after the femtocell access point (a) receives a first handoff completion message from the mobile user station and (b) transmits a second handoff completion message to the target convergence server.

In another aspect, particular embodiments of the disclosed solution provide a method for performing a handoff of an active communication connection for a mobile user station from a macrocell to a femtocell. At a femtocell access point corresponding to the femtocell, a first message is received. The first message is transmitted from a convergence server. The first message includes a request to initiate a handoff from a base station controller corresponding to the macrocell. A second message is transmitted to the convergence server. The second message includes an acknowledgement of a receipt of the first message. A third message is received from the mobile user station. The third message includes a preamble message. A fourth message is transmitted to the mobile user station. The fourth message includes an acknowledgement of a receipt of the preamble message. A fifth message is received from the mobile user station. The fifth message includes an indication of a completion of the handoff. A sixth message is transmitted to the convergence server. The sixth message includes an indication of a successful completion of the handoff.

In another aspect of particular embodiments of the disclosed solution, the handoff may be completed without a transmission of a Session Initiation Protocol (SIP) INVITE message between the convergence server and the femtocell access point. The receiving of the first message may occur after the base station controller determines that a signal strength corresponding to the mobile user station is less than a predetermined threshold.

In some embodiments, after the second message is transmitted, the third message may be received without a transmission of an additional acknowledgement message from the target convergence server to the femtocell access point. The third message may be received after the base station controller has transmitted a Universal Handoff Direction Message to the mobile user station and the mobile user station has transmitted an acknowledgement message to the base station controller.

In yet another aspect, particular embodiments of the disclosed solution provide a method for performing a handoff of an active communication connection for a mobile user station from a macrocell to a femtocell At the mobile user station, a first message is received. The first message is transmitted from a base station controller corresponding to the macrocell. The first message includes a handoff direction message. A second message is transmitted to the base station controller. The second message includes an acknowledgement of a receipt of the handoff direction message. A third message is transmitted to a femtocell access point corresponding to the femtocell. The third message includes at least one preamble frame. A fourth message is received from the femtocell access point. The fourth message includes an acknowledgement of a receipt of the at least one preamble frame. A fifth message is transmitted to the femtocell access point. The fifth message includes an indication of a completion of the handoff. A sixth message is received from the femtocell access point. The sixth message includes an acknowledgement of a completion of the handoff. The mobile user station then communicates on the active communication connection via the femtocell access point.

In another aspect of particular embodiments of the disclosed solution, the handoff may be completed without a transmission or reception of a Session Initiation Protocol (SIP) INVITE message by the femtocell access point.

In some embodiments, the receiving of the first message may occur after the base station controller determines that a signal strength corresponding to the mobile user station is less than a predetermined threshold.

In some embodiments, at least one null frame may be received from the femtocell access point prior to receiving the first message, wherein the receiving at least one null frame occurs after the femtocell access point has received a request to initiate the handoff. Prior to receiving the at least one null frame, the femtocell access point may receive a handoff request message from a convergence server. After receiving the at least one null frame, the femtocell access point may transmit a message to the convergence server that includes an acknowledgement of a receipt of the handoff request message without receiving a further acknowledgement message from the convergence server prior to the mobile user station receiving the first message.

In some embodiments, after the sixth message is received, the femtocell access point may transmit a seventh message to a convergence server that includes an indication that the handoff has been successfully completed prior to the mobile user station communicating on the active communication connection via the femtocell access point.

In yet another aspect, particular embodiments of the disclosed solution provide a mobile switching center for performing a handoff of an active communication connection for a mobile user station from a macrocell to a femtocell. The mobile switching center includes a radio access control function (RACF) subsystem; a call control function (CCF) subsystem in communication with the RACF subsystem; and a trunking subsystem in communication with the RACF subsystem and with a public switched telephone network (PSTN). The RACF subsystem is in communication with the mobile user station via a base station controller corresponding to the macrocell and in communication with a target convergence server. When the mobile user station moves to within a predetermined range with respect to the femtocell, the RACF subsystem is configured to receive a first message transmitted from the base station controller. The first message includes an indication that the active communication connection should be handed off to a femtocell access point corresponding to the femtocell. The RACF subsystem is configured to generate a second message. The second message includes instructions for initiating the handoff. The RACF subsystem is further configured to transmit the second message to the target convergence server and to receive a third message from the target convergence server. The third message includes an indication that the handoff has been successfully initiated. The RACF subsystem is further configured to generate a fourth message. The fourth message includes a direction to commence the handoff. The RACF subsystem is further configured to transmit the fourth message to the base station controller and to receive a fifth message from the base station controller. The fifth message includes a handoff commencement acknowledgement. The RACF subsystem is further configured to receive a sixth message from the target convergence server. The sixth message includes an indication of a completion of a successful handoff. Upon successful handoff completion, the trunking subsystem is configured to provide a connection between the PSTN and the femtocell access point. The RACF subsystem is further configured to transmit a seventh message to the CCF subsystem. The seventh message includes an indication that the mobile user station is communicating with the mobile switching center via a nailed-up trunk.

### BRIEF DESCRIPTION OF THE DRAWINGS

The accompanying drawings, which are incorporated herein and form part of the specification, illustrate various embodiments of the present disclosure and, together with the description, further serve to explain the principles of the disclosure and to enable a person skilled in the pertinent art to make and use the embodiments disclosed herein. In the drawings, like reference numbers indicate identical or functionally similar elements.
FIG. 1 illustrates a conventional logical network architecture of an IP Multimedia Subsystem (IMS).
FIG. 2A illustrates a logical network architecture of a converged CDMA IMS Femtocell system.
FIG. 2B illustrates a block diagram of an enterprise femtocell access point cluster as used in the architecture of FIG. 2A.
FIG. 2C illustrates a block diagram of a mobile switching center as used in the architecture of FIG. 2A.
FIG. 3A illustrates a pre-handoff voice path of an active communication connection between a mobile subscriber and a PSTN, subscriber in a macrocell network.
FIG. 3B illustrates a post-handoff voice path of the active communication connection of FIG. 3A.
FIG. 3C illustrates a post-handoff voice path of an active communication connection in an enterprise femtocell scenario.
FIGS. 4A and 4B illustrate an active mode macrocell to residential femtocell handoff message sequence according to particular embodiments.
FIGS. 5, 5A, 5B, and 5C are flow charts illustrating a method for performing an active mode macrocell, to residential femtocell handoff according to particular embodiments.
FIGS. 6A and 6B illustrate an active mode macrocell to enterprise femtocell handoff message sequence according to particular embodiments.
FIGS. 7, 7A, 7B, and 7C are flow charts illustrating a method for performing an active mode macrocell to enterprise femtocell handoff according to particular embodiments.

### DETAILED DESCRIPTION

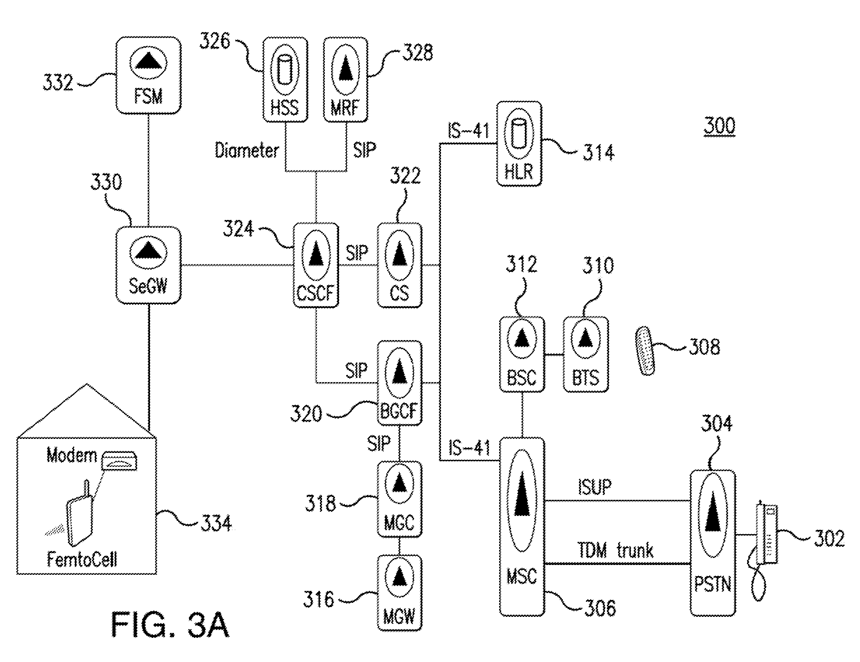

Referring now to FIG. 3A, a voice path 300 is illustrated for an active communication connection between a mobile subscriber and a PSTN subscriber in a macrocell network. The mobile subscriber uses a mobile user station (MUS) 308, which is wirelessly connected over a radio traffic channel to a base transceiver station (BTS) 310. The BTS 310 is controlled via a TDM trunk connection by a base station controller (BSC) 312 for the specific macrocell in which the MUS is geographically located. The BSC 312 is in communication via a TDM trunk connection with a mobile switching center (MSC) 306 which also corresponds to the macrocell. In an embodiment, the MUS is a CDMA mobile unit that supports IS-95 /IS-200 and/or 1X EV-DO air interfaces.

The MSC 306 is in communication via a TDM trunk connection with the PSTN 304. The TDM trunk connection between the MSC 306 and the PSTN 304 may be an Integrated Service Digital Network (ISDN) User Part (ISUP) trunk or an inband signaling trunk.

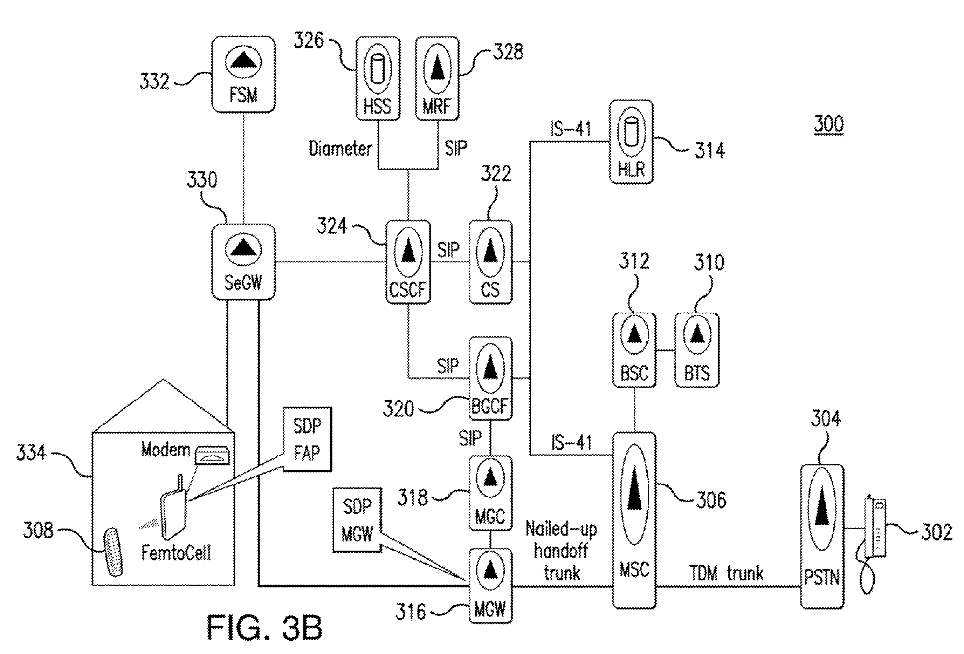

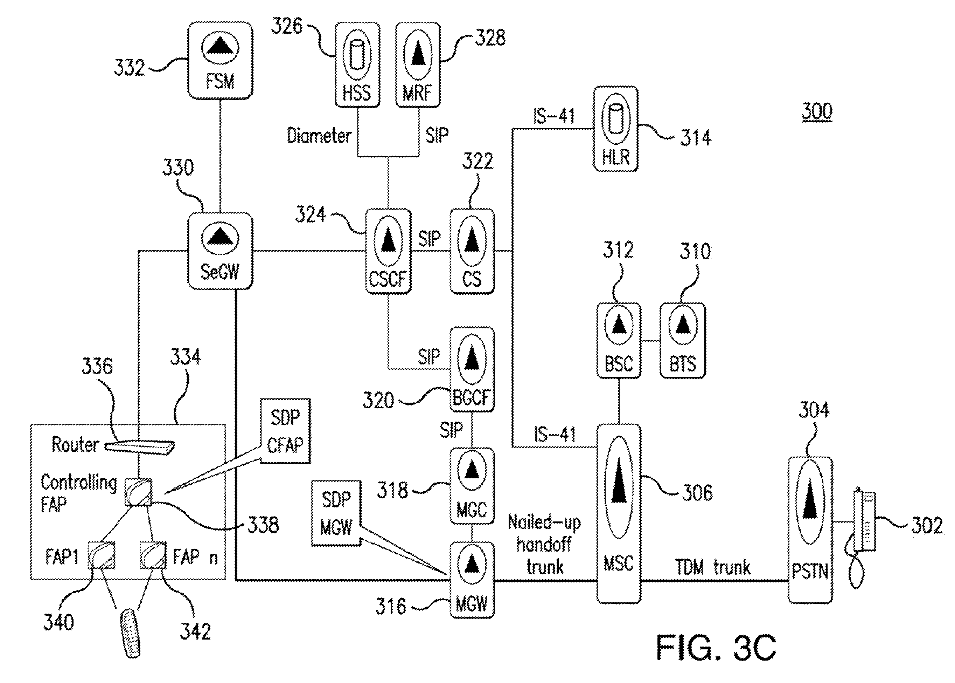

Referring now also to FIG. 3B and FIG. 3C, as the MUS 308 moves near to a residential femtocell access point (FAP) 334, the macrocell MSC 306 will hand the MUS 308 off to the femtocell network via IMS. FIG. 3B illustrates the voice path for the active communication connection between the mobile subscriber and the PSTN subscriber after the handoff from the macrocell network to the femtocell network.

The MUS 308 wirelessly communicates with the FAP 334 over a radio traffic channel. The FAP 334 communicates with the media gateway (MGW) 316 using Real-time Transport Protocol (RTP) via the security gateway (SeGW) 330. The media gateway 316 is in communication via a "nailed-up" TDM handoff trunk connection with the macrocell MSC 306, which remains in communication via a TDM trunk connection with the PSTN 304.

In the enterprise femtocell scenario, as illustrated in FIG. 3C, the FAP 334 includes a router 336, a controlling FAP 338, and additional access points FAP 1 340 and FAP n 342. The MUS 308 wirelessly communicates with either FAP 1 340 or FAP n 342, depending upon its physical proximity to the access points. The message communicated by MUS 308 then proceeds to the controlling FAP 338, the router 336, and then to MGW 316 via SeGW 330.

The operator uses the Femtocell Service Manager (FSM) 332 to provision the FAP 334 via the security gateway 330. The FAP 334 and security gateway 330 are in communication with the femtocell convergence server (CS) 322 via IMS call session control functions (CCF) 324. The femtocell convergence server 322 communicates with a home location register 314 and with the macrocell mobile switching center 306 via an IS-41 connection.

The CSCF 324 communicates with home subscriber server 326 and a mobile relay facility 328. In addition, the CSCF 324 communicates with a breakout gateway control function (BGCF) 320, which is a SIP proxy that processes requests for routing from an S-CSCF when the S-CSCF has determined that the session cannot be routed using DNS or ENUM/DNS. The BGCF 320 includes routing functionality based on telephone numbers. The BGCF 320 may also be accessed by the media gateway 316 via the media gateway control (MGC) 318.

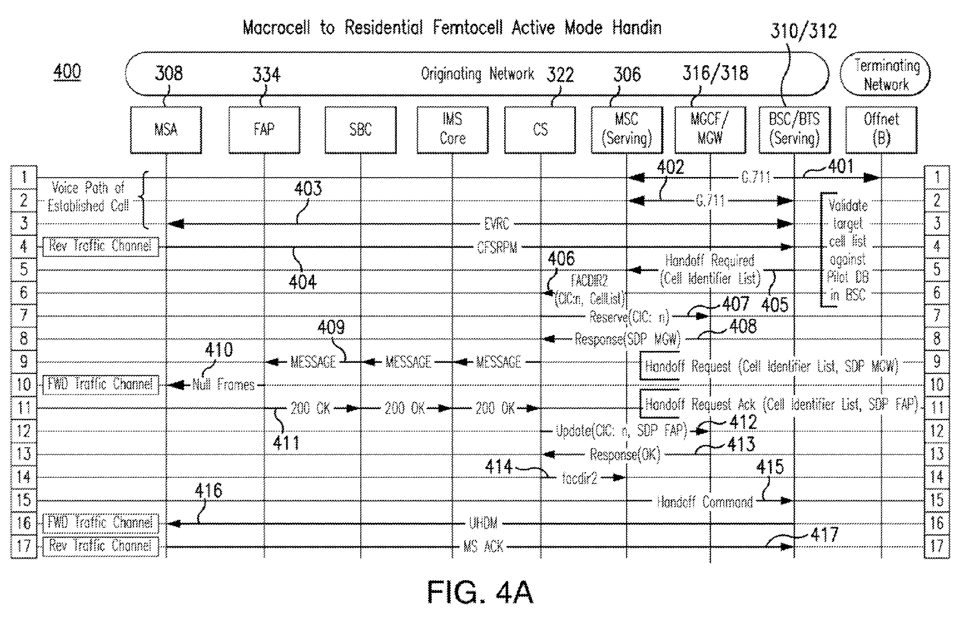

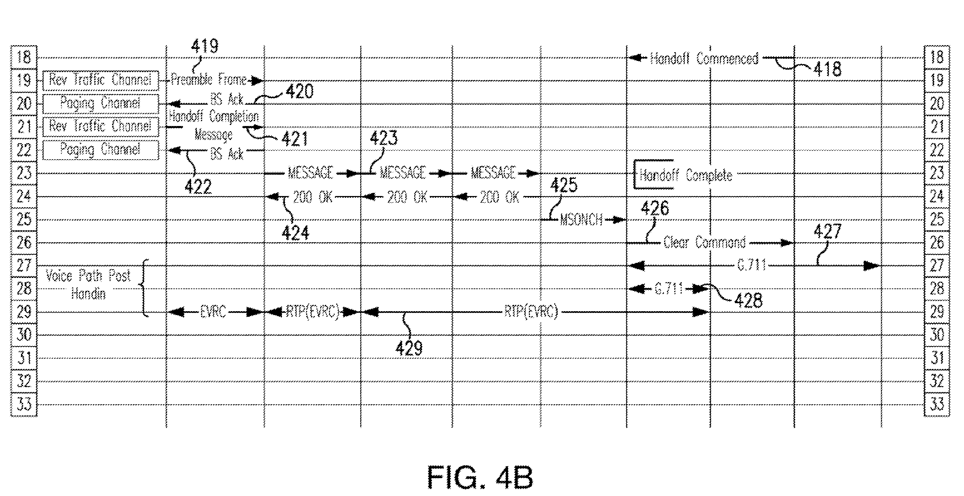

Referring now to FIGS. 4A and 4B, a message sequence for an active mode macrocell to residential femtocell handoff according to particular embodiments is illustrated. Prior to the start of the message sequence of FIG. 4, mobile subscriber "A" has established an active call with a PSTN user "B". Double-ended arrow #1 401 illustrates a voice path between user B and macrocell mobile switching center (MSC) 306; double-ended arrow #2 402 illustrates a voice path between MSC 306 and macrocell base transceiver station (BTS) 310; and double-ended arrow #3 403 illustrates a voice path between BTS 310 and mobile user station (MUS) 308, which is being used by mobile subscriber A. In exemplary embodiments, double-ended arrow #3 403 employs the Enhanced Variable Rate Codec (EVRC).

As mobile subscriber A moves near to the RF coverage area of a femtocell access point (FAP) 334, MUS 308 sends a "Candidate Frequency Search Report Message" (CFSRPM), i.e., message #4 404, over the reverse traffic channel to BTS 310 to indicate the strength of the candidate pilot signal(s). The pilot signal of FAP 334 is the strongest pilot signal.

The macrocell base station controller (BSC) 312 then detects that the Active Pilot Power-to-Interference Wave Power Ratio has dropped below a predetermined threshold. As a result, BTS 310 sends a "Handoff Required" message, which is message #5 405, and which contains a "Cell Identifier List" (i.e., a FAP Cell ID) to identify FAP 334, to MSC 306.

MSC 306 then reserves a circuit of the nailed-up TDM handoff trunk between MSC 306 and convergence server (CS) 322, and sends message #6 406, which is a "FACDlR2" IS-41 message, to CS 322, Message #6 406 directs CS 322 to initiate a "Handoff-Forward" task. Message #6 406 includes two key parameters; a "Target Cell ID," which is the FAP Cell ID for the target femtocell, and an "InterMSCCircuit ID," which is the Circuit Identifier Code (CIC) of the nailed-up TDM handoff trunk.

CS 322 then sends message #7 407, which is a "Reserve (CIC ID)" message, to media gateway control function (MGCF) 318. The purpose of message #7 407 is to obtain Session Description Protocol (SDP) information of the handoff circuit. MGCF 318 interacts with media gateway (MGW) 316 using the Megaco protocol to reserve the circuit. MGW 316 then sends a response containing the SDP of the reserved circuit to 318.

MGCF 318 then sends message #8 408, which is a "Response (SDP MGW)" message, to CS 322. The "Response" message #8 408 includes the SDP information for the reserved circuit. The "'Reserve" message #7 407 and the "Response" message #8 408 are high-level conceptual messages which may be implemented using standard Session Initiation Protocol (SIP) messages such as "INVITE/2000K/ACK," "INFO/2000K," "MESSAGE/2000K," or any other proprietary mechanisms. Any implementation which enables the CIC ID and SDP MGW information to be conveyed may be used. The "Reserve" message #7 407 and the "Response" message #8 408 can be communicated directly between CS 322 to MGCF 318, or these messages can be communicated through the IMS core via S-CSCF 324 and BGCF 320.

CS 322 then sends a multi-part "SIP MESSAGE," which is message #9 409, to FAP 334 to request the FAP 334 to prepare for handoff. This message encapsulates a "Handoff Request" with the FAP Cell ID and the SDP MGW information, which is the SDP information for the reserved circuit. In exemplary embodiments, message #9 409 does not include a "SIP INVITE" message, because the use of an "SIP INVITE" message increases handoff setup time by requiring the exchange of at least four messages (i.e., an INVITE message, a 180 Ringing message, a 200OK message, and an ACK message) between CS 322 and FAP 334. This, in turn, may cause a race condition to occur, which may induce timing errors and thereby cause handoff failure. After receiving message #9 409, FAP 334 allocates necessary radio link and SDP resources (i.e., SDP FAP) for handoff, and prepares for radio channel switchover by sending forward traffic null frames (i.e., message #10 410) to MUS 308. Then, in response to the handoff. request message #9 409, FAP 334 sends message #11 411 to CS 322. Message #11 411 is a multi-part "200OK" response encapsulating a "handoff Request Acknowledgement" and the SDP FAP information.

CS 322 then sends an "Update (CIC: n, SDP FAP)" request, i.e., message #12 412, to MGCF 318 to inform MGCF 318 and MGW 316 of the SDP FAP information. MGCF 318 then sends message #13 413, a "Response (OK)" message, to CS 322 to acknowledge the "'update" request. The "update" message and the response" message are high-level conceptual messages and can be implemented, for example, by using "SIP MESSAGE/2000K," "SIP UPDATE/2000K," "SIP re-INVITE/2000K/ACK," or any other suitable mechanism which accomplishes the objective of enabling the FAP and the MGW to exchange SDP information in order to establish a Real-time Transport Protocol (RTP) voice path between the FAP and the MGW.

CS 322 then sends a "FACDIR RETURN RESULT" message, i.e., message #14 414, to the macrocell MSC 306. This message informs the MSC that the necessary SDP information has been exchanged between the FAP and the MGW.

MSC 306 sends message #15 415, a "handoff Command" message, to BTS 310 and BSC 312 to commence the source cell handoff procedure. Then, BTS 310 sends a "Universal Handoff Direction" message (UHDM) (i.e., message #16 416) to MUS 308, thereby directing MUS 308 to hand off to the femtocell network. MUS 308 acknowledges receipt of the UHDM by sending message #17 417, an "MS ACK" message, to BTS 310. After receiving the acknowledgement in message #17 417, BTS 310 sends a "Handoff Commenced" message (i.e., message #18 418) to MSC 306 to indicate that the handoff command has been sent to the mobile station and that an acknowledgement has been received from the mobile station.

MUS 308 then switches to the new CDMA frequency channel and frame offset associated with FAP 334. MUS 308 begins sending preamble frames, i.e., message #19 419, to FAP 334 on a reverse traffic channel. Upon receiving preamble frames in message #19 419, FAP 334 acknowledges receipt by sending a "BS ACK" message, i.e., message #20 420, to MUS 308.

MUS 308 then sends message #21 421, which is a "handoff Completion" message, to FAP 334, and FAP 334 acknowledges by sending a "BS ACK" message, i.e., message #22 422, to MUS 308. FAP 334 then sends a SIP MASSAGE encapsulating a Handoff Complete message, i.e., message #23 423, to CS 322 to indicate that MUS 308 has successfully performed a handoff. Alternatively, message #23 423 may be a "SIP INFO" message. CS 322 then sends message #24 424, a "200OK" message, to FAP 334 to acknowledge receipt of message #23 423.

CS 322 then sends a "MSONCH" IS-41 message, i.e., message #25 425, to MSC 306 to indicate a successful hard handoff. MSC 306 then sends a "Clear Command" message, i.e., message #26 426, to BTS 310 and BSC 412 to instruct BSC 412 to release all service option confections to MUS 308 and the associated dedicated resource.

Mobile subscriber "A" continues to communicate on the same active call with PSTN user "B" after successful handoff completion. Double-ended arrow #27 427 illustrates a voice path between user B and MSC 306; double-ended arrow #28 428 illustrates a voice path between MSC 306 and MGW 316; and double-ended arrow #29 429 illustrates a voice path between MGW 316 and MUS 308 via FAP 334, In exemplary embodiments, message #29 429 employs the Enhanced Variable Rate Codec (EVRC).

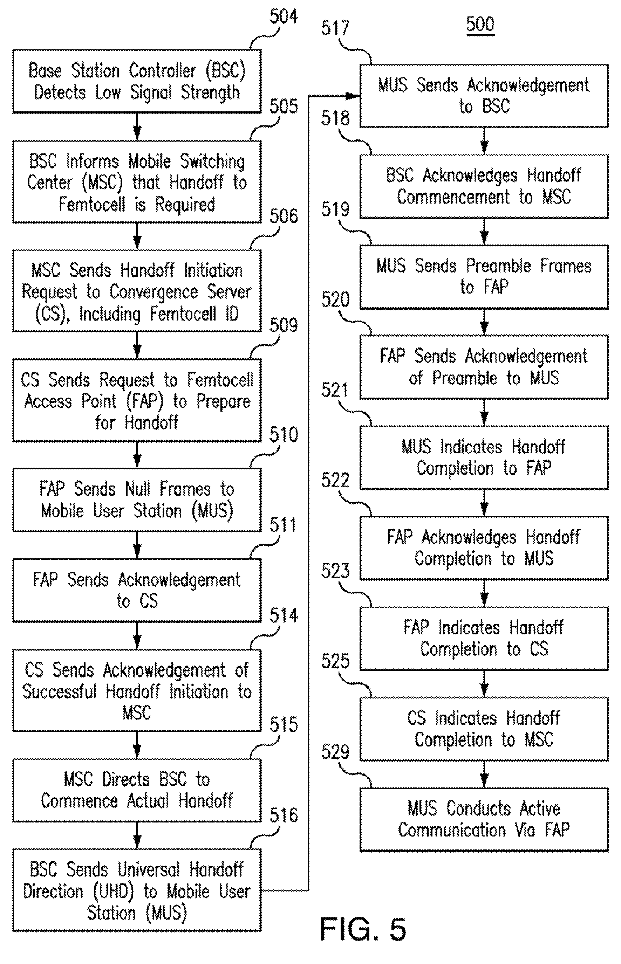

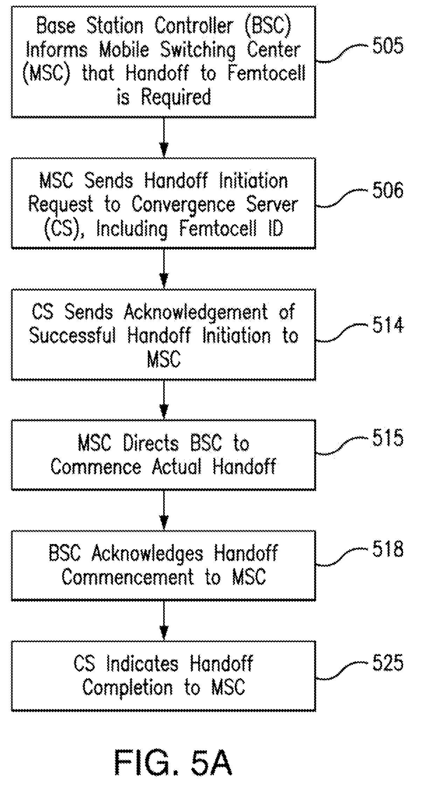

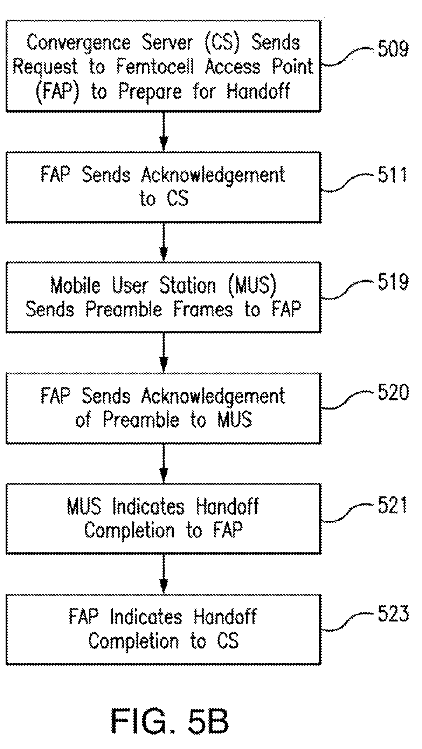

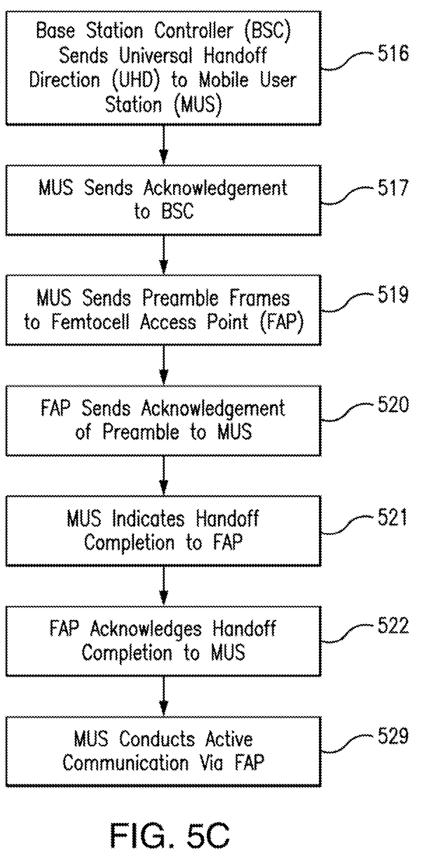

Referring now to FIG. 5, a flowchart 500 illustrates a method for handing off an active communication connection from a macrocell to a residential femtocell, in accordance with particular embodiments. In the first step 504, the macrocell base station controller (BSC) detects that the Active Pilot Power-to-interference Wave Power Ratio associated with a mobile user station (MUS) on an active call has dropped below a predetermined threshold. As a result, at step 505, the BSC controls the base station transceiver (BTS) to send a message message, #5 405, a "handoff Require" message) to the macrocell mobile switching center (MSC), to inform the MSC that a handoff to a femtocell is required.

Upon being informed of the need for a handoff to a femtocell, at step 506, the MSC sends a handoff initiation request (e.g., message #6 406) to the convergence server (CS). The handoff initiation request includes identification information to identify the remtocell to which the connection will be handed off. Then, in step 509, the CS sends a request (e.g., message #9 409) to the femtocell access point (FAP) corresponding to the identified femtocell to request that the FAP prepare to receive a handoff.

In step 510, the FAP begins handoff preparation by sending null frames (e.g., massage #10 410) to the MUS, and then, in step 511, the FAP acknowledges the handoff preparation request by sending an acknowledgement message (e.g., message #11 411) to the CS. Upon receipt of this acknowledgement, the CS communicates with the media gateway (MGW) to exchange SDP information in order to establish a Real-time Transport Protocol (RTP) voice path between the FAP and the MGW. Then, in step 514, the CS acknowledges a successful handoff initiation by sending a message (e.g., message #14 414) to the MSC.

The MSC then directs the BSC to commence the actual handoff in step 515. This direction may be accomplishes, for example, by the transmission of message #15 415, In response to receipt of this direction, at step 516, the BSC controls the BTS to send a UHD message (e.g., message #16 416) to the MUS, and the MUS acknowledges receipt of the UHD message (e.g., by sending message #17 417) in step 517. The BSC, in turn, acknowledges handoff commencement in step 518 by sending an acknowledgment message, e.g., message #18 418, to the MSC.

The MUS then sends preamble frames to the FAP (e.g., message #19 419) on a reverse traffic channel in step 519, and the FAP acknowledges receipt of the preamble frames (e.g., message #20 420) in step 520. Then, in step 521, the MUS indicates that the handoff has been completed by sending a message (e.g., message #21 421) to the FAP, and the FAP acknowledges handoff completion to the MUS (e.g., message #22 422) in step 522.

At step 523, the FAP indicates to the CS that the handoffis complete by sending a message (e.g., message #23 423), and then, at step 525, the CS indicates handoff. completion by sending a message (e.g., message #25 425) to the MSC. Finally, in step 529, the MUS continues to conduct the active communication via the FAP.

Referring now to FIGS 5A, 5B, and 5C, each flowchart illustrates a subset of the steps performed as part of the method 500 by respective entities for handing off an active communication connection from a macrocell to a residential femtocell. In particular, FIG. 5A is a flowchart that includes the steps performed by the MSC 306; FIG. 5B is a flowchart that includes the steps performed by the FAP 334; and FIG. 5C is a flowchart that includes the steps performed by the MUS 308.

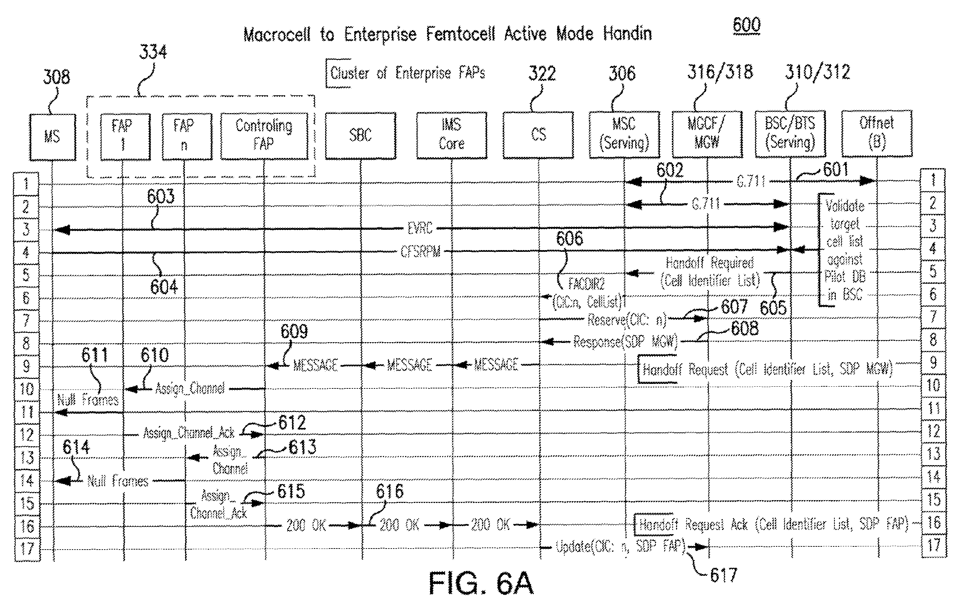

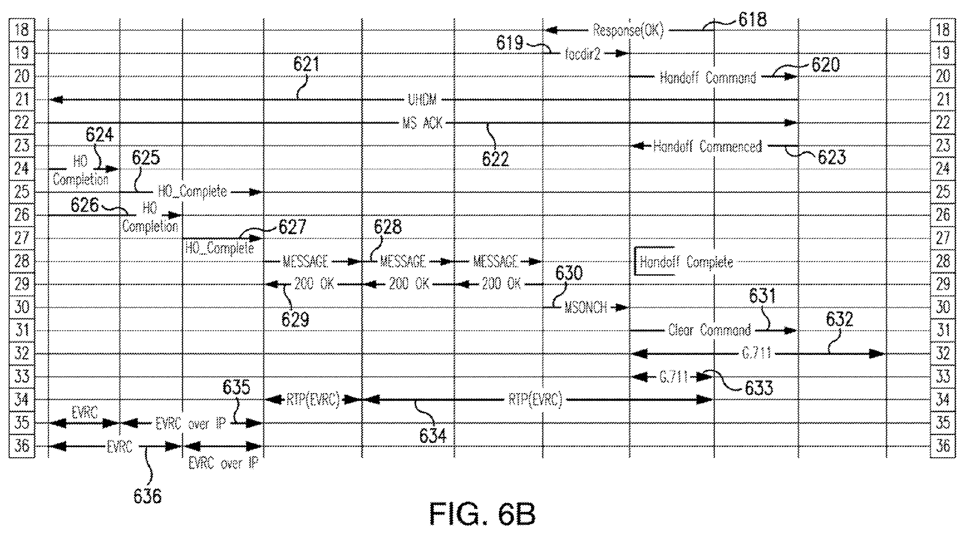

Referring now to FIGS 6A and 6B, a message sequence for an active mode macrocell-to-enterprise-temtocells handoff according to particular embodiments is illustrated. In this scenario, the enterprise femtocells include a cluster of femtocells. Prior to the start of the message sequence of FIG. 6, mobile subscriber "A" has established an active call with a PSTN user "B". Double-ended arrow #1 601

Illustrates a voice path between user B and macrocell mobile switching center (MSC) 306; double-ended arrow #2 602 illustrates a voice path between MSC 306 and macrocell base transceiver station (BTS) 310; and double-ended arrow #3 603 illustrates a voice path between BTS 310 and mobile user station (MUS) 308, which is being used by mobile subscriber A. In exemplary embodiments, message #3 603 employs the Enhanced Variable Rate Codec (EVRC).

As mobile subscriber A moves near to the REF coverage area of a cluster of femtocell access points (FAP) 334, MUS 308 sends a "Candidate Frequency Search Report Message" (CFSRPM), i.e., message #4 604, over the reverse traffic channel to BTS 310 to indicate the strength of the candidate pilot signal(s). The pilot signal of FAP 1 and FAP n are the strongest pilot signals.

The macrocell base station controller (BSC) 312 then detects that the Active Pilot Power-to-Interference Wave Power Ratio has dropped below a predetermined threshold. As a result, BTS 310 sends a "Handoff Required" message, which is message #5 605, and which contains a "Cell Identifier List" (i.e., FAP 1 Cell ID and FAP n Cell ID) to identify cluster FAP 334, to MSC 306.

MSC 306 then reserves a circuit of the nailed-up TDM handoff trunk between MSC 306 and convergence server (CS) 322, and sends message #6 606, which is a "FACDIR2" IS-41 message, to CS 322, Message #6 606 directs CS 322 to initiate a "Handoff-Fonvard" task. Message #6 606 includes two key parameters: a. "Target Cell List," which includes the FAP 1 Cell ID and FAP n Cell ID for the target femtocell cluster, and an "InterMSCCircuit ID," which is the Circuit Identifier Code (CIC) of the nailed-up TDM handoff trunk.

CS 322 then sends message #7 607, which is a "Reserve (CIC ID)" message, to media gateway control function (MGCF) 318. The purpose of message #7 607 is to obtain Session Description Protocol (SDP) information of the handoff circuit. MGCF 318 interacts with media gateway (MGW) 316 using the Megaco protocol to reserve the circuit. MGW 316 then sends a response containing the SDP of the reserved circuit to MGCF 318.

MGCF 318 then sends message #8 608, which is a "response (SDP MGW)" message, to CS 322. The "response" message #8 608 includes the SDP information for the reserved circuit. The "Reserve" message #7 607 and the "Response" message #8 608 are high-level conceptual messages which may be implemented using standard Session initiation Protocol (SIP) messages such as "INVITE/200OK/ACK," "INFO/2000K" "MESSAGE/200OK," or any other proprietary mechanisms. Any implementation which enables the CIC ID and SDP MGW information to be conveyed may be used. The "Reserve" message #7 607 and the "Response" message #8 608 can be communicated directly between CS 322 to MGCF 318, or these messages can be communicated through the IMS core via S-CSCF 324 and BGCF 320.

CS 322 accesses its cell database to determine that FAP I and FAP n are located in a cluster FAP 334 which is controlled by a Controlling FAP. CS 322 then sends a multi-part "SIP MESSAGE," which is message #9 609, to the Controning FAP within FAP 334 to request the Controlling FAP to prepare for handoff. This message encapsulates a "Handoff Bequest" with the FAP 1 Cell ID, the FAP n Cell ID, and the SDP MGW information, which is the SDP information for the reserved circuit. In exemplary embodiments, message #9 609 does not include a "SIP INVITE" message, because the use of an "SIP INVITE" message may calise a race condition to occur, which may induce timing errors and thereby cause handoff failure. After receiving message #9 609, the Controlling FAP of FAP 334 allocates necessary radio link and SDP resources (i.e., SDP FAP) for handoff. and sends an "Allocate_Channel" message, i.e., message #10 610, to FAP 1 over a local enterprise IP backbone to request that FAP 1 allocate radio resources.

FAP 1 prepares for radio channel switchover by sending forward traffic null frames (i.e., message #11 611) to MUS 308. Then, in response to the "Anocate_Channel" message #10 610, FAP 1 sends an acknowledgement message, i.e., message #12 612, to the Controlling FAP to indicate a successful radio resource allocation. The Controlling FAP then interacts with FAP n similarly as with FAP 1 by sending an "Allocate_Channel" message, i.e., message #13 613, to FAP n over a local enterprise IP backbone to request that FAP n allocate radio resources. FAP n prepares for radio channel switchover by sending forward traffic null frames (i.e., message #14 (14) to MUS 308. Then, in response to the "Allocate_Channer" message #13 613, FAP n sends an acknowledgement message, i.e., message #15 615, to the Controlling FAP to indicate a successful radio resource allocation.

Upon receiving messages #12 612 and message #15 615 indicating successful radio resource avocations from FAP 1 and FAP n, respectively, and in response to handoff request message #9 609, the Controlling FAP sends message #16 616 to CS 322. Message #16 616 is a multi-part "200OK" response encapsulating a "Handoff Request Acknowledgement" and the SDP CFAP information.

CS 322 then sends an "update (CIC: n, SDP FAP)" request, i.e., message #17 617, to MGCF 318 to inform MGCF 318 and MGW 316 of the SDP FAP information. MGCF 318 then sends message #18 618, a "Response (OK)" message, to CS 322 to acknowledge the "update" request. The "update" message and the "Response" message are high-level conceptual messages and can be implemented, for example, by using "SIP MESSAGE/200OK;' "SIP UPDATE/200OK." "SIP re-INVITE/200OK/ACK," or any other suitable mechanism which accomplishes the objective of enabling the FAP and the MGW to exchange SDP information in order to establish a Real-time Transport Protocol (RTP) voice path between the FAP and the MGW.

CS 322 then sends a "FACDIR RETURN RESULT" message, i.e., message #19 619, to the macrocell MSC 306. This message informs the MSC that the necessary SDP information has been exchanged between the FAP and the MGW.

MSC 306 sends message #20 620, a "Handoff Command" message, to BTS 310 and BSC 312 to commence the source cell handoff procedure. Then, BTS 310 sends a "universal Handoff Direction" message (UHDM) (i.e., message #21 621) to MUS 308, thereby directing MUS 308 to hand off to the femtocell network. MUS 308 acknowledges receipt of the UHDM by sending message #22 622, an "MS ACK" message, to BTS 310. After receiving the acknowledgement in message #22 622, BTS 310 sends a "Handoff Commenced" message (i.e., message #23 623) to MSC 306 to indicate that the handoff command has been sent to the mobile station and that an acknowledgement has been received from the mobile station.

Then, MUS 308 actually switches to the new CDMA frequency channel and frame offset associated with FAP 1 within cluster FAP 334. MUS 308 begins sending preamble frames to FAP 1 on a reverse traffic channel. Upon receiving preamble frames, FAP 1 acknowledges receipt by sending a "BS ACK" message to MUS 308. MUS 308 then sends message #24 624, which is a "handoff Completion" message, to FAP 1, and FAP 1 informs the Controlling FAP that the handoff has been completed by sending message #25 625. MUS 308 also sends message #26 626, another "Handoff Completion" message, to FAP n, and FAP n informs the Controlling FAP that the handoff has been completed by sending message #27 627.

The Controlling FAP then sends a SIP MESSAGE encapsulating a Handoff Complete message, i.e., message #28 628, to CS 322 to indicate that MUS 308 has successfully performed a handoff. to the enterprise FAP cluster 334. Alternatively, message #28 628 may be a "SIP INFO" message. CS 322 then sends message #29 629, a "200OK" message, to the Controlling FAP to acknowledge receipt of message #28 628.

Then, CS 322 sends a "MSONCH" IS-41 message, i.e., message #30 630, to MSC 306 to indicate a successful hard handoff, MSC 306 then sends a "Clear Command" message, i.e., message #31 631, to BTS 310 and BSC 412 to instruct BSC 412 to release all service option connections to MUS 308 and the associated dedicated resource.

Mobile subscriber "A" continues to communicate on the same active call with PSTN user "B" after successful handoff completion. Double-ended arrow #32 632 illustrates a voice path between user B and MSC 306; double-ended arrow #33 633 illustrates a voice path between MSC 306 and MGW 316; and double-ended arrow #34 634 illustrates a voice path between MGW 316 and MUS 308 via FAP 334, Double-ended arrow #35 635 illustrates a voice path between MUS 308 and FAP 1, and double-ended arrow #36 626 illustrates a voice path between Mums 308 and FAP n.

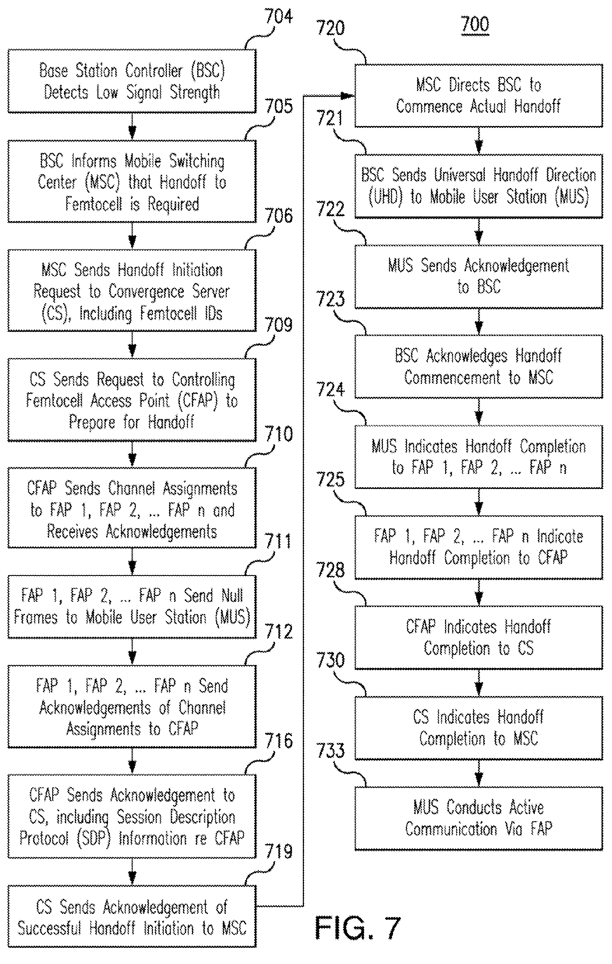

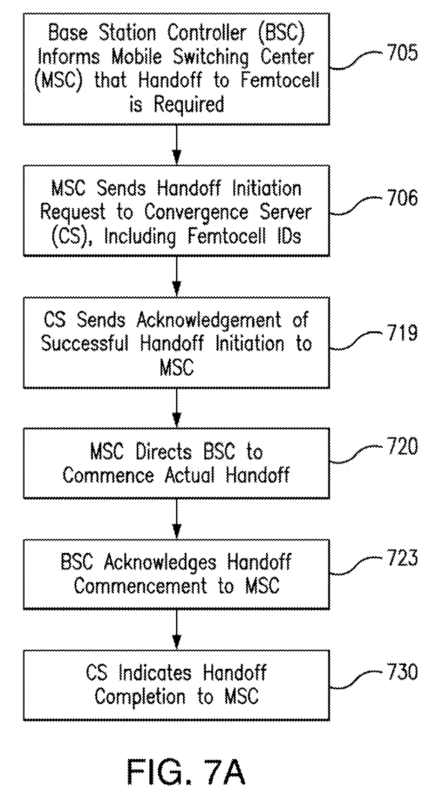

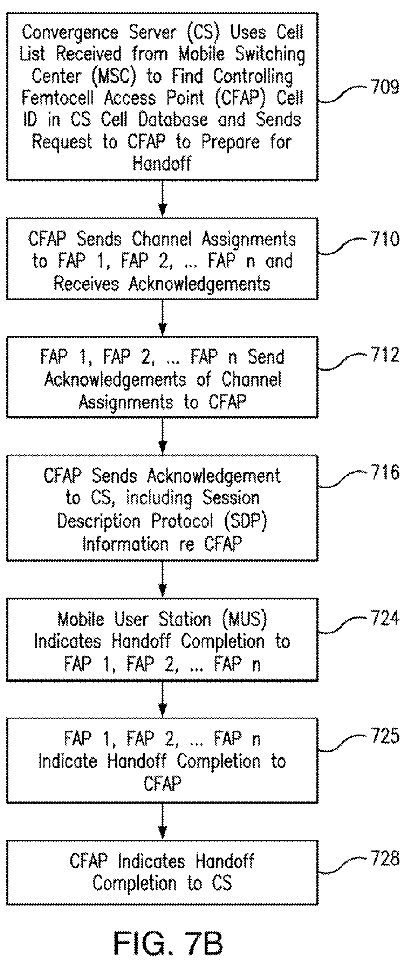

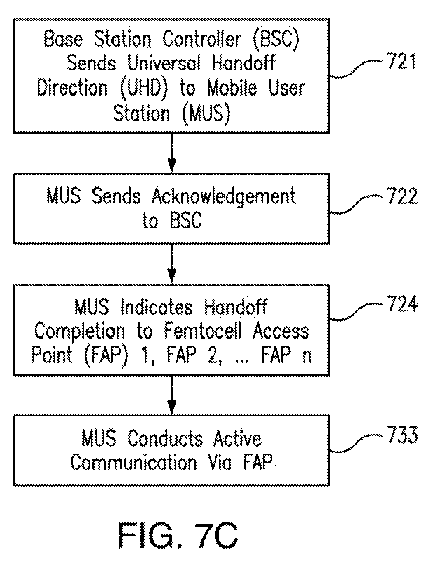

Referring now to FIG. 7, a flowchart 700 illustrates a method for handing off an active communication connection from a macrocell to a enterprise femtocell cluster, in accordance with particular embodiments. In the first step 704, the macrocell base station controller (BSC) detects that the Active Pilot Power-to-interference Wave Power Ratio associated with a mobile user station (MUS) on an active call has dropped below a predetermined threshold. As a result, at step 705, the BSC controls the base station transceiver (BTS) to send a message (e.g., message #5 605, a "handoff Required" message) to the macrocell mobile switching center (MSC), to inform the MSC that a hall doff to a femtocell is required.

Upon being informed of the need for a handoff to a femtocell, at step 706, the MSC sends a handoff. initiation request (e.g., message #6 606) to the convergence server (CS). The handoff. initiation request includes identification information to identify the individual femtocell access points (FAPs) within the enterprise femtocell cluster to which the connection will be handed off. The identified individual femtocell access points may or may not include the controlling femtocell access point corresponding to the enterprise femtocell cluster. The CS uses the list of identified individual FAPs in conjunction with its cell database to determine the controlling FAP of the cluster. In step 709, the CS sends a request (e.g., message #9 609) to the controlling FAP to request that the controlling FAP prepare to receive a handoff.

In step 710, the controlling FAP begins handoff preparation by sending channel assignments to individual FAPs within the cluster (e.g., message #10 610 and message # 13 613). In step 711, the respective individual FAPs send null frames (e.g., message #11 611 and message #14 614) to the MUS, and then, in step 712, the respective individual FAPs send acknowledgement messages (e.g., message #12 612 and message #15 615) to the controlling FAP to acknowledge the channel assignments. Then, in step 716, the controlling FAP acknowledges the handoff preparation request by sending an acknowledgement message (e.g., message #16 616) to the CS. This acknowledgement message includes Session Description Protocol (SDP) information pertaining to the controlling FAP, including IP address and port number of the controlling FAP.

Upon receipt of this acknowledgment, the CS communicates with the media gateway (MGW) to exchange SDP information (e.g., message #17 617 and message #18 618) in order to establish a Real-time Transport Protocol. (RTP) voice path between the FAP and the MGW. Then, in step 519, the CS acknowledges a successful handoff initiation by sending a message (e.g., message #19 619) to the MSC.

The MSC then directs the BSC to commence the actual handoff in step 720. This direction may be accomplished, for example, by the transmission of message #20 620. In response to receipt of this direction, at step 721, the BSC control the BTS to send a UHD message (e.g., message #21 621) to the MUS, and the MUS acknowledges receipt of the UHD message (e.g., by sending message #22 622) in step 722. The BSC, in turn, acknowledges handoff commencement in step 723 by sending an acknowledgment message, e.g., message #23 623, to the MSC.

The MUS then sends preamble frames to the individual FAPs within the enterprise femtocell cluster on a reverse traffic channel, and the individual FAPs respectively acknowledge receipt of the preamble frames. Then, in step 724, the MUS indicates that the handoffhas been completed by sending messages (e.g., message #24 624 and message #26 626) to the respective individual FAPs, and the individual FAPs respectively acknowledge handoff completion to the controlling FAP (e.g., message #25 625 and message #27 627) in step 725.

At step 728, the controlling FAP indicates to the CS that the handoff is complete by sending a message (e.g., message #28 628), and then, at step 730 the CS indicates handoff completion by sending a message (e.g., message #30 630) to the MSC. Finally, in step 733, the MUS continues to conduct the active communication via the enterprise femtocell cluster. In the uplink direction, a voice frame "x" transmitted by the MUS is received by FAP 1 and FAP n, which then forward voice frame "x" to the controlling FAP. The controlling FAP selects the strongest received voice frame and forwards that voice frame to the MGW 316. In the downlink direction, the MGW transmits a voice frame "y" to the controlling FAP, which then forwards that same voice frame "y" to both FAP 1 and FAP n, each of which forward voice frame "y" to the MUS.

Referring now to FIGS 7A, 7B, and 7C, each flowchart illustrates a subset of the steps performed as part of the method 700 by respective entities for handing off an active communication connection from a macrocell to a enterprise femtocell cluster. In particular, FIG. 7A is a flowchart that includes the steps performed by the MSC 306; FIG. 7B is a flowchart that includes the steps performed by the enterprise FAP 334; and FIG. 7C is a flowchart that includes the steps performed by the MUS 308.

While various embodiments have been described above, it should be understood that they have been presented by way of example only, and not limitation. Thus, the breadth and scope of the present disclosure should not be limited by any of the above-described exemplary embodiments. For example, although an exemplary embodiment that relates to voice communication has been described, the disclosure may be used for any type of communication, including voice, data, video, text, or any other communication service connecting two or more user agents. Moreover, any combination of the above-described elements in all possible variations thereof is encompassed by the disclosure unless otherwise indicated herein or otherwise clearly contradicted by context.

Additionally, while the processes described above and illustrated in the drawings are shown as a sequence of steps, this was done solely for the sake of illustration. Accordingly, it is contemplated that some steps may be added, some steps may be omitted, the order of the steps may be re-arranged, and some steps may be performed in parallel.

## Claims

1. A method for performing a handoff of an active communication connection for a mobile user station (308) from a macrocell to a femtocell, the steps of the method performed at a mobile switching center (306) corresponding to the macrocell comprising:
(a) receiving a first message transmitted from a base station controller (312) corresponding to the macrocell, the first message including an indication that the active communication connection should be handed off to a femtocell access point (334) corresponding to the femtocell;
(b) generating and transmitting a second message to a target convergence server (322), the second message including instructions for initiating the handoff;
(c) receiving a third message transmitted from the target convergence server (322), the third message including an indication that the handoff has been successfully initiated;
(d) generating and transmitting a fourth message to the base station controller (312), the fourth message including a direction to the base station controller (312) to commence the handoff;
(e) receiving a fifth message transmitted from the base station controller (312), the fifth message including a handoff commencement acknowledgement; and
(f) receiving a sixth message from the target convergence server (322), the sixth message including an indication of a completion of a successful handoff, and
**characterised in that**:
the handoff is initiated when the target convergence server (322) sends to the femtocell access point (334), a multipart Session Initiation Protocol, SIP, handoff request message that includes a femtocell access point identifier and Session Description Protocol, SDP, media gateway information.

2. The method of claim 1, wherein the receiving of the first message further comprises receiving the first message after the base station controller (312) determines that a signal strength corresponding to the mobile user station (308) is less than a predetermined threshold.

3. The method of claim 1, wherein, after the second message has been transmitted, the third message is received after the target convergence server (322) has transmitted a request message to the femtocell access point (334) that includes a request that the femtocell access point (334) prepare for handoff and the femtocell access point (334) has transmitted an acknowledgement message to the target convergence server (322).

4. The method of claim 3, wherein the third message is received without a transmission of an additional acknowledgement message from the target convergence server (322) to the femtocell access point (334).

5. The method of claim 1, wherein, after the fourth message has been transmitted, the fifth message is received after the base station controller (312) has transmitted a Universal Handoff Direction message to the mobile user station (308) and the mobile user station (308) has transmitted an acknowledgement message to the base station controller (312).

6. The method of claim 1, wherein, after the fifth message has been received, the sixth message is received after the femtocell access point (334) (a) receives a first handoff completion message from the mobile user station (308) and (b) transmits a second handoff completion message to the target convergence server (322).

7. The method of claim 1, wherein the second message includes a femtocell identification and a Circuit Identifier Code corresponding to a handoff trunk communication channel between the mobile switching center (306) and a media gateway station, the media gateway station being in communication with the femtocell access point (334).

8. A method for performing a handoff of an active communication connection for a mobile user station (308) from a macrocell to a femtocell, the steps of the method performed at a femtocell access point (334) corresponding to the femtocell comprising:
(a) receiving a first message transmitted from a convergence server (322), the first message including a request to initiate a handoff from a base station controller (312) corresponding to the macrocell;
(b) transmitting a second message to the convergence server (322), the second message including an acknowledgement of a receipt of the first message;
(c) receiving from the mobile user station (308) a third message, the third message including a preamble message;
(d) transmitting a fourth message to the mobile user station (308), the fourth message including an acknowledgement of a receipt of the preamble message;
(e) receiving from the mobile user station (308) a fifth message, the fifth message including an indication of a completion of the handoff; and
(f) transmitting a sixth message to the convergence server (322), the sixth message including an indication of a successful completion of the handoff, and
**characterised in that**:
the handoff is initiated when the target convergence server (322) sends to the femtocell access point (334), a multipart Session Initiation Protocol, SIP, handoff request message that includes a femtocell access point identifier and Session Description Protocol, SDP, media gateway information.

9. The method of claim 8, wherein the step of receiving the first message comprises receiving the first message after the base station controller (312) determines that a signal strength corresponding to the mobile user station (308) is less than a predetermined threshold.

10. The method of claim 8, wherein after the second message is transmitted, the third message is received without a transmission of an additional acknowledgement message from the target convergence server (322) to the femtocell access point (334).

11. The method of claim 8, wherein the third message is received after the base station controller (312) has transmitted a Universal Handoff Direction Message to the mobile user station (308) and the mobile user station (308) has transmitted an acknowledgement message to the base station controller (312).

12. A method for performing a handoff of an active communication connection for a mobile user station (308) from a macrocell to a femtocell, the steps of the method performed at the mobile user station (308) comprising:
(a) receiving a first message transmitted from a base station controller (312) corresponding to the macrocell, the first message including a handoff direction message;
(b) transmitting a second message to the base station controller (312), the second message including an acknowledgement of a receipt of the handoff direction message;
(c) transmitting a third message to a femtocell access point (334) corresponding to the femtocell, the third message including at least one preamble frame;
(d) receiving a fourth message from the femtocell access point (334), the fourth message including an acknowledgement of a receipt of the at least one preamble frame;
(e) transmitting a fifth message to the femtocell access point (334), the fifth message including an indication of a completion of the handoff;
(f) receiving a sixth message from the femtocell access point (334), the sixth message including an acknowledgement of a completion of the handoff; and
(g) communicating on the active communication connection via the femtocell access point (334), and **characterised in that**
the handoff is initiated when the femtocell access point (334) receives a multipart Session Initiation Protocol, SIP, handoff request message that includes a femtocell access point identifier and Session Description Protocol, SDP, media gateway information.

13. The method of claim 12, wherein the receiving of the first message further comprises receiving the first message after the base station controller (312) determines that a signal strength corresponding to the mobile user station (308) is less than a predetermined threshold.

14. The method of claim 12, further comprising receiving at least one null frame from the femtocell access point (334) prior to receiving the first message, wherein the receiving at least one null frame occurs after the femtocell access point (334) has received a request to initiate the handoff.

15. The method of claim 14, wherein prior to receiving the at least one null frame, the femtocell access point (334) receives a handoff request message from a convergence server (322), and after receiving the at least one null frame, the femtocell access point (334) transmits a message to the convergence server (322) that includes an acknowledgement of a receipt of the handoff request message without receiving a further acknowledgement message from the convergence server (322) prior to the mobile user station (308) receiving the first message.

16. The method of claim 12, wherein after the sixth message is received, the femtocell access point (334) transmits a seventh message to a convergence server (322) that includes an indication that the handoff has been successfully completed prior to the mobile user station (308) communicating on the active communication connection via the femtocell access point (334).

17. A mobile switching center (306) for performing a handoff of an active communication connection for a mobile user station (308) from a macrocell to a femtocell, comprising:
a radio access control function, RACF, subsystem (262) in communication with the mobile user station (308) via a base station controller (312) corresponding to the macrocell and in communication with a target convergence server (322);
a call control function, CCF, subsystem (264) in communication with the RACF subsystem (262); and
a trunking subsystem (260) in communication with the RACF subsystem (262) and with a public switched telephone network, PSTN, (218),
wherein when the mobile user station (308) moves to within a predetermined range with respect to the femtocell, the RACF subsystem (262) is configured to receive a first message transmitted from the base station controller (312), the first message including an indication that the active communication connection should be handed off to a femtocell access point (334) corresponding to the femtocell;
wherein the RACF subsystem (262) is configured to generate a second message, the second message including instructions for initiating the handoff;
wherein the RACF subsystem (262) is further configured to transmit the second message to the target convergence server (322) and to receive a third message from the target convergence server (322), the third message including an indication that the handoff has been successfully initiated;
wherein the RACF subsystem (262) is further configured to generate a fourth message, the fourth message including a direction to commence the handoff;
wherein the RACF subsystem (262) is further configured to transmit the fourth message to the base station controller (312) and to receive a fifth message from the base station controller (312), the fifth message including a handoff commencement acknowledgement;
wherein the RACF subsystem (262) is further configured to receive a sixth message from the target convergence server (322), the sixth message including an indication of a completion of a successful handoff; and
wherein, upon successful handoff completion, the trunking subsystem (260) is configured to provide a connection between the PSTN (218) and the femtocell access point (334), and wherein the RACF subsystem (262) is further configured to transmit a seventh message to the CCF subsystem (264), the seventh message including an indication that the mobile user station (308) is communicating with the mobile switching center (216) via a Time Division Multiplexing, TDM, handoff trunk between the mobile switching centre and the target convergence server (322), and **characterised in that**:
the handoff is initiated when the femtocell access point (334) receives a multipart Session Initiation Protocol, SIP, handoff request message that includes a femtocell access point identifier and Session Description Protocol, SDP, media gateway information.

## Patentansprüche

1. Verfahren zum Ausführen einer Übergabe einer aktiven Kommunikationsverbindung für eine Mobilfunknutzerstation (308) von einer Makrozelle zu einer Femtozelle, wobei die Schritte des Verfahrens bei einer der Makrozelle entsprechenden Mobilfunkschaltzentrale (306) ausgeführt werden, das Verfahren umfassend:
(a) Empfangen einer von einer der Makrozelle entsprechenden Basisstationssteuerung (312) gesendeten ersten Nachricht, wobei die erste Nachricht einen Hinweis darauf beinhaltet, dass die aktive Kommunikationsverbindung zu einem der Femtozelle entsprechenden Femtozellen-Zugriffspunkt (334) übergeben werden soll;
(b) Erzeugen und Senden einer zweiten Nachricht zu einem Zielkonvergenzserver (322), wobei die zweite Nachricht Anweisungen zum Initiieren der Übergabe beinhaltet;
(c) Empfangen einer von dem Zielkonvergenzserver (322) gesendeten dritten Nachricht, wobei die dritte Nachricht einen Hinweis darauf beinhaltet, dass die Übergabe erfolgreich initiiert wurde;
(d) Erzeugen und Senden einer vierten Nachricht zu der Basisstationssteuerung (312), wobei die vierte Nachricht eine Anweisung an die Basisstationssteuerung (312) zum Beginnen der Übergabe beinhaltet;
(e) Empfangen einer von der Basisstationssteuerung (312) gesendeten fünften Nachricht, wobei die fünfte Nachricht eine Übergabebeginn-Bestätigung beinhaltet; und
(f) Empfangen einer sechsten Nachricht von dem Zielkonvergenzserver (322), wobei die sechste Nachricht einen Hinweis auf einen Abschluss einer erfolgreichen Übergabe beinhaltet, und **dadurch gekennzeichnet ist, dass**:
die Übergabe initiiert wird, wenn der Zielkonvergenzserver (322) eine mehrteilige Session-Initiation-Protocol-, SIP-, Übergabeanfragenachricht zu dem Femtozellen-Zugriffspunkt (334) sendet, die eine Femtozellen-Zugriffspunkt-Kennzeichnung und Session-Description-Protocol-, SDP-, Media-Gateway-Informationen beinhaltet.

2. Verfahren nach Anspruch 1, wobei das Empfangen der ersten Nachricht weiter umfasst, dass die erste Nachricht empfangen wird, nachdem die Basisstationsteuerung (312) bestimmt, dass eine der Mobilfunknutzerstation (308) entsprechende Signalstärke geringer als ein vorbestimmter Schwellwert ist.

3. Verfahren nach Anspruch 1, wobei, nachdem die zweite Nachricht gesendet wurde, die dritte Nachricht empfangen wird, nachdem der Zielkonvergenzserver (322) eine Anfragenachricht zu dem Femtozellen-Zugriffspunkt (334) gesendet hat, die eine Anfrage beinhaltet, dass der Femtozellen-Zugriffspunkt (334) sich für die Übergabe vorbereitet, und der Femtozellen-Zugriffspunkt (334) eine Bestätigungsnachricht zu dem Zielkonvergenzserver (322) gesendet hat.

4. Verfahren nach Anspruch 3, wobei die dritte Nachricht ohne ein Senden einer zusätzlichen Bestätigungsnachricht von dem Zielkonvergenzserver (322) zu dem Femtozellen-Zugriffspunkt (334) empfangen wird.

5. Verfahren nach Anspruch 1, wobei, nachdem die vierte Nachricht gesendet wurde, die fünfte Nachricht empfangen wird, nachdem die Basisstationssteuerung (312) eine Universal-Handoff-Direction-Nachricht zu der Mobilfunknutzerstation (308) gesendet hat und die Mobilfunknutzerstation (308) eine Bestätigungsnachricht zu der Basisstationssteuerung (312) gesendet hat.

6. Verfahren nach Anspruch 1, wobei, nachdem die fünfte Nachricht empfangen wurde, die sechste Nachricht empfangen wird, nachdem der Femtozellen-Zugriffspunkt (334) (a) eine erste Übergabeabschlussnachricht von der Mobilfunknutzerstation (308) empfängt und (b) eine zweite Übergabeabschlussnachricht zu dem Zielkonvergenzserver (322) sendet.

7. Verfahren nach Anspruch 1, wobei die zweite Nachricht eine Femtozellen-Kennzeichnung und einen Circuit-Identifier-Code entsprechend einem Übergabeabschnittkommunikationskanal zwischen der Mobilfunkschaltzentrale (306) und einer Media-Gateway-Station beinhaltet, wobei die Media-Gateway-Station in Kommunikation mit dem Femtozellen-Zugriffspunkt (334) steht.

8. Verfahren zum Ausführen einer Übergabe einer aktiven Kommunikationsverbindung für eine Mobilfunknutzerstation (308) von einer Makrozelle zu einer Femtozelle, wobei die Schritte des Verfahrens bei einem der Femtozelle entsprechenden Femtozellen-Zugriffspunkt (334) ausgeführt werden, das Verfahren umfassend:
(a) Empfangen einer ersten von einem Konvergenzserver (322) gesendeten Nachricht, wobei die erste Nachricht eine Anfrage zum Initiieren einer Übergabe von einer der Makrozelle entsprechenden Basisstationsteuerung (312) beinhaltet;
(b) Senden einer zweiten Nachricht zu dem Konvergenzserver (322), wobei die zweite Nachricht eine Bestätigung eines Erhalts der ersten Nachricht beinhaltet;
(c) Empfangen einer dritten Nachricht von der Mobilfunknutzerstation (308), wobei die dritte Nachricht eine Präambel-Nachricht beinhaltet;
(d) Senden einer vierten Nachricht zu der Mobilfunknutzerstation (308), wobei die vierte Nachricht eine Bestätigung eines Erhalts der Präambel-Nachricht beinhaltet;
(e) Empfangen einer fünften Nachricht von der Mobilfunknutzerstation (308), wobei die fünfte Nachricht einen Hinweis auf einen Abschluss der Übergabe beinhaltet; und
(f) Senden einer sechsten Nachricht zu dem Konvergenzserver (322), wobei die sechste Nachricht einen Hinweis auf einen erfolgreichen Abschluss der Übergabe beinhaltet, und **dadurch gekennzeichnet ist, dass**:
die Übergabe initiiert wird, wenn der Zielkonvergenzserver (322) eine mehrteilige Session-Initiation-Protocol-, SIP-, Übergabeanfragenachricht zu dem Femtozellen-Zugriffspunkt (334) sendet, die eine Femtozellen-Zugriffspunkt-Kennzeichnung und Session-Description-Protocol-, SDP-, Media-Gateway-Informationen beinhaltet.

9. Verfahren nach Anspruch 8, wobei der Schritt des Empfangens der ersten Nachricht beinhaltet, dass die erste Nachricht empfangen wird, nachdem die Basisstationssteuerung (312) bestimmt, dass eine der Mobilfunknutzerstation entsprechende Signalstärke geringer als ein vorbestimmter Schwellwert ist.

10. Verfahren nach Anspruch 8, wobei, nachdem die zweite Nachricht gesendet wurde, die dritte Nachricht ohne ein Senden einer zusätzlichen Bestätigungsnachricht von dem Zielkonvergenzserver (322) zu dem Femtozellen-Zugriffspunkt (334) empfangen wird.

11. Verfahren nach Anspruch 8, wobei die dritte Nachricht empfangen wird, nachdem die Basisstationsteuerung (312) eine Universal-Handoff-Direction-Nachricht zu der Mobilfunknutzerstation (308) gesendet hat und die Mobilfunknutzerstation (308) eine Bestätigungsnachricht zu der Basisstationssteuerung (312) gesendet hat.

12. Verfahren zum Ausführen einer Übergabe einer aktiven Kommunikationsverbindung für eine Mobilfunknutzerstation (308) von einer Makrozelle zu einer Femtozelle, wobei die Schritte des Verfahrens bei der Mobilfunknutzerstation (308) ausgeführt werden, das Verfahren umfassend:
(a) Empfangen einer ersten, von einer der Makrozelle entsprechenden Basisstationsteuerung (312) gesendeten Nachricht, wobei die erste Nachricht eine Übergabeanweisungsnachricht beinhaltet;
(b) Senden einer zweiten Nachricht zu der Basisstationssteuerung (312), wobei die zweite Nachricht eine Bestätigung eines Erhalts der Übergabeanweisungsnachricht beinhaltet;
(c) Senden einer dritten Nachricht zu einem der Femtozelle entsprechenden Femtozellen-Zugriffspunkt (334), wobei die dritte Nachricht wenigstens einen Präambel-Frame beinhaltet;
(d) Empfangen einer vierten Nachricht von dem Femtozellen-Zugriffspunkt (334), wobei die vierte Nachricht eine Bestätigung eines Erhalts des wenigstens einen Präambel-Frames beinhaltet;
(e) Senden einer fünften Nachricht zu dem Femtozellen-Zugriffspunkt (334), wobei die fünfte Nachricht einen Hinweis auf einen Abschluss der Übergabe beinhaltet;
(f) Empfangen einer sechsten Nachricht von dem Femtozellen-Zugriffspunkt (334), wobei die sechste Nachricht eine Bestätigung eines Abschlusses der Übergabe beinhaltet; und
(g) Kommunizieren auf der aktiven Kommunikationsverbindung über den Femtozellen-Zugriffspunkt (334), und **dadurch gekennzeichnet, dass**
die Übergabe initiiert wird, wenn der Femtozellen-Zugriffspunkt (334) eine mehrteilige Session-Initiation-Protocol-, SIP-, Handoff-Anfragenachricht empfängt, die eine Femtozellen-Zugriffspunkt-Kennzeichnung und Session-Description-Protocol-, SDP-, Media-Gateway-Informationen beinhaltet.

13. Verfahren nach Anspruch 12, wobei das Empfangen der ersten Nachricht weiter umfasst, dass die erste Nachricht empfangen wird, nachdem die Basisstationssteuerung (312) bestimmt, dass eine der Mobilfunknutzerstation (308) entsprechende Signalstärke geringer ist als ein vorbestimmter Schwellwert.

14. Verfahren nach Anspruch 12, weiter umfassend ein Empfangen wenigstens eines Null-Frames von dem Femtozellen-Zugriffspunkt (334) vor dem Empfangen der ersten Nachricht, wobei das Empfangen des wenigstens einen Null-Frames eintritt, nachdem der Femtozellen-Zugriffspunkt (334) eine Anfrage zum Initiieren der Übergabe empfangen hat.

15. Verfahren nach Anspruch 14, wobei vor dem Empfangen des wenigstens einen Null-Frames, der Femtozellen-Zugriffspunkt (334) eine Übergabeanfragenachricht von einem Konvergenzserver (322) empfängt, und der Femtozellen-Zugriffspunkt (334) nach dem Empfangen des wenigstens einen Null-Frames eine Nachricht zu dem Konvergenzserver (322) sendet, die eine Bestätigung eines Erhalts der Übergabeanfragenachricht ohne ein Empfangen einer weiteren Bestätigungsnachricht von dem Konvergenzserver (322) beinhaltet, bevor die Mobilfunknutzerstation (308) die erste Nachricht empfängt.

16. Verfahren nach Anspruch 12, wobei, nachdem die sechste Nachricht empfangen wurde, der Femtozellen-Zugriffspunkt (334) eine siebte Nachricht zu einem Konvergenzserver (322) sendet, die einen Hinweis darauf beinhaltet, dass die Übergabe erfolgreich abgeschlossen wurde, bevor die Mobilfunknutzerstation (308) auf der aktiven Kommunikationsverbindung über den Femtozellen-Zugriffspunkt (334) kommuniziert.

17. Mobilfunkschaltzentrale (306) zum Ausführen einer Übergabe einer aktiven Kommunikationsverbindung für eine Mobilfunknutzerstation (308) von einer Makrozelle zu einer Femtozelle, umfassend:
ein Radio-Access-Control-Function-, RACF-, Teilsystem (262) in Kommunikation mit der Mobilfunknutzerstation (308) über eine der Makrozelle entsprechende Basisstationssteuerung (312) und in Kommunikation mit einem Zielkonvergenzserver (322);
ein Call-Control-Function-, CCF-, Teilsystem (264) in Kommunikation mit dem RACF-Teilsystem (262); und
ein Abschnittteilsystem (260) in Kommunikation mit dem RACF-Teilsystem (262) und mit einem Public-Switched-Telephone-Network, PSTN, (218),
wobei, wenn die Mobilfunknutzerstation (308) sich innerhalb eines vorbestimmten Bereichs in Bezug zu der Femtozelle bewegt, das RACF Teilsystem (262) ausgebildet ist zum Empfangen einer ersten von der Basisstationssteuerung (312) gesendeten Nachricht, wobei die erste Nachricht einen Hinweis darauf beinhaltet, dass die aktive Kommunikationsverbindung zu einem der Femtozelle entsprechenden Femtozellen-Zugriffspunkt (334) übergeben werden soll;
wobei das RACF-Teilsystem (262) ausgebildet ist zum Erzeugen einer zweiten Nachricht, wobei die zweite Nachricht Anweisungen zum Initiieren der Übergabe beinhaltet;
wobei das RACF-Teilsystem (262) weiter ausgebildet ist zum Senden der zweiten Nachricht zu dem Zielkonvergenzserver (322) und zum Empfangen einer dritten Nachricht von dem Zielkonvergenzserver (322), wobei die dritte Nachricht einen Hinweis darauf beinhaltet, dass die Übergabe erfolgreich initiiert wurde;
wobei das RACF-Teilsystem (262) weiter ausgebildet ist zum Erzeugen einer vierten Nachricht, wobei die vierte Nachricht eine Anweisung zum Beginnen der Übergabe beinhaltet;
wobei das RACF-Teilsystem (262) weiter ausgebildet ist zum Senden der vierten Nachricht zu der Basisstationssteuerung (312) und zum Empfangen einer fünften Nachricht von der Basisstationssteuerung (312), wobei die fünfte Nachricht eine Übergabebeginn-Bestätigung beinhaltet;
wobei das RACF-Teilsystem (262) weiter ausgebildet ist zum Empfangen einer sechsten Nachricht von dem Zielkonvergenzserver (322), wobei die sechste Nachricht einen Hinweis auf einen Abschluss einer erfolgreichen Übergabe beinhaltet; und
wobei, auf einen erfolgreichen Übergabeabschluss, das Abschnittteilsystem (260) ausgebildet ist zum Bereitstellen einer Verbindung zwischen dem PSTN (218) und dem Femtozellen-Zugriffspunkt (334), und wobei das RACF-Teilsystem (262) weiter ausgebildet ist zum Senden einer siebten Nachricht zu dem CCF-Teilsystem (264), wobei die siebte Nachricht einen Hinweis darauf beinhaltet, dass die Mobilfunknutzerstation (308) mit der Mobilfunkschaltzentrale (216) über eine Time-Division-Multiplexing-, TDM-, Übergabeabschnitt zwischen der Mobilfunkschaltzentrale und dem Zielkonvergenzserver (322) kommuniziert, und **dadurch gekennzeichnet ist, dass**:
die Übergabe initiiert wird, wenn der Femtozellen-Zugriffspunkt (334) eine mehrteilige Session-Initiation-Protocol-, SIP-, Übergabeanfragenachricht empfängt, die eine Femtozellen-Zugriffspunkt-Kennzeichnung und Session-Description-Protocol-, SDP-, Media-Gateway-Informationen beinhaltet.

## Revendications

1. Procédé d'exécution d'un transfert d'une connexion de communication active d'une station mobile d'utilisateur (308) entre une macrocellule et une femtocellule, les étapes du procédé exécutées sur le centre de commutation de mobiles (306) correspondant à la macrocellule consistant à :
(a) recevoir un premier message envoyé par un contrôleur de station de base (312) correspondant à la macrocellule, le premier message comprenant une indication que la connexion de communication active doit être transférée à un point d'accès de femtocellule (334) qui correspond à la femtocellule ;
(b) produire et émettre un deuxième message vers un serveur de convergence cible (322), le deuxième message contenant des instructions pour lancer le transfert ;
(c) recevoir un troisième message émis par le serveur de convergence cible (322), le troisième message comprenant une indication que le transfert a été lancé avec succès ;
(d) produire et émettre un quatrième message vers le contrôleur de station de base (312), le quatrième message comprenant une instruction donnée au contrôleur de station de base (312) pour commencer le transfert ;
(e) recevoir un cinquième message émis par le contrôleur de station de base (312), le cinquième message comprenant un accusé de réception du début du transfert ; et
(f) recevoir un sixième message provenant du serveur de convergence cible (322), le sixième message comprenant une indication d'un achèvement d'un transfert réussi ; et
**caractérisé en ce que** :
le transfert est lancé lorsque le serveur de convergence cible (322) envoie au point d'accès de femtocellule (334) un message de demande de transfert selon le protocole de lancement de session, SIP pour « *Session Initiation Protocol* », qui comprend un identificateur de point d'accès de femtocellule et des informations de passerelle multimédia selon le protocole de description de session, SDP pour « *Session Description Protocol ».*

2. Procédé selon la revendication 1, dans lequel l'étape de réception du premier message comprend en outre l'étape consistant à recevoir le premier message après que le contrôleur de station de base (312) a déterminé qu'une intensité de signal correspondant à la station mobile d'utilisateur (308) est inférieure à un seuil prédéterminé.

3. Procédé selon la revendication 1, dans lequel, après que le deuxième message a été émis, le troisième message est reçu après que le serveur de convergence cible (322) a émis vers le point d'accès de femtocellule (334) un message de demande qui comprend une demande adressée au point d'accès de femtocellule (334) de se préparer pour le transfert et que le point d'accès de femtocellule (334) a émis un message d'accusé de réception vers le serveur de convergence cible (322).

4. Procédé selon la revendication 3, dans lequel le troisième message est reçu sans émission d'un message d'accusé de réception supplémentaire entre le serveur de convergence cible (322) et le point d'accès de femtocellule (334).

5. Procédé selon la revendication 1, dans lequel, après que le quatrième message a été émis, le cinquième message est reçu après que le contrôleur de station de base (312) a émis un message universel d'instruction de transfert vers la station mobile d'utilisateur (308) et que la station mobile d'utilisateur (308) a émis un message d'accusé de réception vers le contrôleur de station de base (312).

6. Procédé selon la revendication 1, dans lequel, après que le cinquième message a été reçu, le sixième message est reçu après que le point d'accès de femtocellule (334) (a) a reçu un premier message d'achèvement de transfert provenant de la station mobile d'utilisateur (308) et (b) a émis un second message d'achèvement de transfert vers le serveur de convergence cible (322).

7. Procédé selon la revendication 1, dans lequel le deuxième message contient une identification de femtocellule et un code d'identification de circuit correspondant à un canal de communication de jonction de transfert entre le centre de commutation de mobiles (306) et une station de passerelle multimédia, la station de passerelle multimédia étant en communication avec le point d'accès de femtocellule (334).

8. Procédé d'exécution d'un transfert d'une connexion de communication active d'une station mobile d'utilisateur (308) entre une macrocellule et une femtocellule, les étapes du procédé exécutées sur le point d'accès de femtocellule (334) correspondant à la femtocellule consistant à :
(a) recevoir un premier message envoyé par un serveur de convergence cible (322), le premier message comprenant une demande de lancement d'un transfert en provenance d'un contrôleur de station de base (312) correspondant à la macrocellule ;
(b) émettre un deuxième message vers le serveur de convergence cible (322), le deuxième message contenant un accusé de réception du premier message ;
(c) recevoir de la station mobile d'utilisateur (308) un troisième message, le troisième message comprenant un message de préambule ;
(d) émettre un quatrième message vers la station mobile d'utilisateur (308), le quatrième message comprenant un accusé de réception du message de préambule ;
(e) recevoir de la station mobile d'utilisateur (308) un cinquième message, le cinquième message comprenant une indication d'un achèvement du transfert ; et
(f) émettre un sixième message vers le serveur de convergence cible (322), le sixième message comprenant une indication de l'achèvement réussi du transfert ; et
**caractérisé en ce que** :
le transfert est lancé lorsque le serveur de convergence cible (322) envoie au point d'accès de femtocellule (334) un message de demande de transfert selon le protocole de lancement de session, SIP pour « *Session Initiation Protocol* », qui comprend un identificateur de point d'accès de femtocellule et des informations de passerelle multimédia selon le protocole de description de session, SDP pour « *Session Description Protocol ».*

9. Procédé selon la revendication 8, dans lequel l'étape de réception du premier message comprend l'étape consistant à recevoir le premier message après que le contrôleur de station de base (312) a déterminé qu'une intensité de signal correspondant à la station mobile d'utilisateur (308) est inférieure à un seuil prédéterminé.

10. Procédé selon la revendication 8, dans lequel, après que le deuxième message a été émis, le troisième message est reçu sans émission d'un message supplémentaire d'accusé de réception entre le serveur de convergence cible (322) et le point d'accès de femtocellule (334).

11. Procédé selon la revendication 8, dans lequel le troisième message est reçu après que le contrôleur de station de base (312) a émis un message universel d'instruction de transfert vers la station mobile d'utilisateur (308) et que la station mobile d'utilisateur (308) a émis un message d'accusé de réception vers le contrôleur de station de base (312).

12. Procédé d'exécution d'un transfert d'une connexion de communication active d'une station mobile d'utilisateur (308) entre une macrocellule et une femtocellule, les étapes du procédé exécutées sur la station mobile d'utilisateur (308) consistant à :
(a) recevoir un premier message envoyé par un contrôleur de station de base (312) correspondant à la macrocellule, le premier message comprenant un message d'instruction de transfert ;
(b) émettre un deuxième message vers le contrôleur de station de base (312), le deuxième message contenant un accusé de réception du message d'instruction de transfert ;
(c) émettre un troisième message vers un point d'accès de femtocellule (334) correspondant à la femtocellule, le troisième message comprenant au moins une trame de préambule ;
(d) recevoir un quatrième message provenant du point d'accès de femtocellule (334), le quatrième message comprenant un accusé de réception de ladite au moins une trame de préambule ;
(e) émettre un cinquième message vers le point d'accès de femtocellule (334), le cinquième message comprenant une indication d'un achèvement du transfert ;
(f) recevoir un sixième message provenant du point d'accès de femtocellule (334), le sixième message comprenant un accusé de réception d'un achèvement d'un transfert ; et
(g) communiquer sur la connexion de communication active via le point d'accès de femtocellule (334) ; et
**caractérisé en ce que** :
le transfert est lancé lorsque le point d'accès de femtocellule (334) reçoit un message de demande de transfert en parties multiples selon le protocole de lancement de session, SIP pour « *Session Initiation Protocol* », qui comprend un identificateur de point d'accès de femtocellule et des informations de passerelle multimédia selon le protocole de description de session, SDP pour « *Session Description Protocol ».*

13. Procédé selon la revendication 12, dans lequel l'étape de réception du premier message comprend en outre l'étape consistant à recevoir le premier message après que le contrôleur de station de base (312) a déterminé qu'une intensité de signal correspondant à la station mobile d'utilisateur (308) est inférieure à un seuil prédéterminé.

14. Procédé selon la revendication 12, comprenant en outre l'étape consistant à recevoir au moins une trame nulle du point d'accès de femtocellule (334) avant de recevoir le premier message, la réception d'au moins une trame nulle se produisant après que le point d'accès de femtocellule (334) a reçu une demande de lancement du transfert.

15. Procédé selon la revendication 14, dans lequel, avant de recevoir ladite au moins une trame nulle, le point d'accès de femtocellule (334) reçoit un message de demande de transfert provenant d'un serveur de convergence (322) et, après avoir reçu ladite au moins une trame nulle, le point d'accès de femtocellule (334) émet vers le serveur de convergence (322) un message qui comprend un accusé de réception du message de demande de transfert sans avoir reçu un message d'accusé de réception supplémentaire du serveur de convergence (322) avant que la station mobile d'utilisateur (308) reçoive le premier message.

16. Procédé selon la revendication 12, dans lequel, après avoir reçu le sixième message, le point d'accès de femtocellule (334) émet vers un serveur de convergence (322) un septième message qui comprend une indication que le transfert a été exécuté avec succès avant que la station mobile d'utilisateur (308) ne communique sur la connexion de communication active via le point d'accès de femtocellule (334).

17. Centre de commutation de mobiles (306) destiné à exécuter un transfert d'une connexion de communication active d'une station mobile d'utilisateur (308) entre une macro-cellule et une femtocellule, comprenant :
un sous-système de fonction de commande d'accès radio, RACF pour « *Radio Access Control Function* », (262) qui communique avec la station mobile d'utilisateur (308) via un contrôleur de station de base (312) correspondant à la macrocellule et qui communique avec un serveur de convergence cible (322) ;
un sous-système de fonction de commande d'appel, CCF pour « *Call Control Function* », (264) qui communique avec le sous-système RACF (262) ; et
un sous-système de jonction (260) qui communique avec le sous-système RACF (262) et avec un réseau téléphonique public commuté, RTPC, (218) ;
dans lequel, lorsque la station mobile d'utilisateur (308) s'approche à une distance prédéterminée de la femtocellule, le sous-système RACF (262) est configuré pour recevoir un premier message émis par le contrôleur de station de base (312), le premier message comprenant une indication que la connexion de communication active doit être transférée à un point d'accès de femtocellule (334) correspondant à la femtocellule ;
dans lequel le sous-système RACF (262) est configuré pour produire un deuxième message, le deuxième message comprenant des instructions pour le lancement du transfert ;
dans lequel le sous-système RACF (262) est en outre configuré pour émettre le deuxième message vers le serveur de convergence cible (322) et pour recevoir un troisième message du serveur de convergence cible (322), le troisième message comprenant une indication que le transfert a été lancé avec succès ;
dans lequel le sous-système RACF (262) est en outre configuré pour produire un quatrième message, le quatrième message comprenant une instruction de débuter le transfert ;
dans lequel le sous-système RACF (262) est en outre configuré pour émettre le quatrième message vers le contrôleur de station de base (312) et pour recevoir un cinquième message du contrôleur de station de base (312), le cinquième message comprenant un accusé de réception du début de transfert ;
dans lequel le sous-système RACF (262) est en outre configuré pour recevoir un sixième message du serveur de convergence (322), le sixième message comprenant une indication d'un achèvement réussi du transfert ; et
dans lequel, après achèvement réussi du transfert, le sous-système de jonction (260) est configuré pour fournir une connexion entre le réseau RTPC (218) et le point d'accès de femtocellule (334), et dans lequel le sous-système RACF (262) est en outre configuré pour émettre un septième message vers le sous-système CCF (264), le septième message comprenant une indication du fait que la station mobile d'utilisateur (308) communique avec le centre de commutation de mobiles (216) via une jonction de transfert à multiplexage par répartition dans le temps entre le centre de commutation de mobiles et le serveur de convergence cible (322) ; et
**caractérisé en ce que** :
le transfert est lancé lorsque le point d'accès de femtocellule (334) reçoit un message de demande de transfert en parties multiples selon le protocole de lancement de session, SIP pour « *Session Initiation Protocol* », qui comprend un identificateur de point d'accès de femtocellule et des informations de passerelle multimédia selon le protocole de description de session, SDP pour « *Session Description Protocol ».*
